# EUROPEAN PATENT APPLICATION

(11) **EP 4 641 986 A1**
(43) Date of publication of application: **29.10.2025**
(21) Application number: 22968825.4
(22) Date of filing: 19.12.2022
(51) Int. Cl.: H04L 27/00

(54) **DATA PROCESSING METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Dehns Germany Partnerschaft mbB
(86) International application number: PCT/CN2022/140166
(87) International publication number: WO 2024/130521

(57) **Abstract**

The present disclosure belongs to the technical field of communications. Provided are a data processing method and apparatus, and a device and a storage medium. The method comprises: collecting data sample information, wherein the data sample information comprises at least one of input-related information and label-related information of an artificial intelligence (AI) model, and the data sample information is used for training the AI model; and sending the data sample information to a server. Provided in the present disclosure is a processing method specific to "data processing", such that when data sample information is collected, the data sample information can be sent to a server, thus reducing the number of situations where a data sample information collection process cannot be determined, and improving the convenience of data processing.

## Description

### TECHNICAL FIELD

The present disclosure relates to the technical field of communication, and in particular, to a data processing method and apparatus, a device and a storage medium.

### BACKGROUND

In the communication system, with the continuous development of wireless communication, the widespread application of the 5th generation mobile communication technology (5G) has brought enormous changes to all aspects of people's lives. Artificial intelligence (AI) technology has achieved continuous breakthroughs in many fields, bringing convenience to people's lives while also promoting industrial upgrading in various industries. When training AI models, it is necessary to be based on a large amount of data sets and various assistance information. Therefore, how to collect data sets and assistance information has become an urgent technical problem that needs to be solved.

### SUMMARY

The present disclosure proposes a data processing method and apparatus, a device and a storage medium, which can send data sample information to a server when data sample information is collected, which reduces the situation where the data sample information collection process cannot be determined, and improves the convenience of data processing.

An embodiment of the present disclosure provides a data processing method, which is performed by a terminal and includes:
collecting data sample information, where the data sample information includes at least one of input-related information and label-related information of an artificial intelligence (AI) model, and the data sample information is used for training the AI model; and
sending the data sample information to a server.

Another aspect of the present disclosure provides a data processing method, which is performed by a base station and includes:
collecting assistance information corresponding to data sample information, where the assistance information corresponding to the data sample information is used to assist in training an AI model; and
performing at least one of following operations:
sending the assistance information corresponding to the data sample information to a server;
sending the assistance information corresponding to the data sample information to a terminal; and
sending the assistance information corresponding to the data sample information to a core network device.

Another aspect of the present disclosure provides a data processing method, which is performed by a core network device and includes:
receiving data sample information and assistance information corresponding to the data sample information, where the data sample information is used for training an AI model, the assistance information corresponding to the data sample information is used to assist in training the AI model, and the data sample information includes at least one of input-related information and label-related information of the model; and
sending the data sample information and the assistance information corresponding to the data sample information to a server.

An embodiment of another aspect of the present disclosure provides a data processing method, where the method is performed by a server, and the method includes:
receiving data sample information and assistance information corresponding to the data sample information, where the data sample information is used for training an AI model, the assistance information corresponding to the data sample information is used to assist in training the AI model, and the data sample information includes at least one of input-related information and label-related information of the model.

An embodiment of another aspect of the present disclosure provides a data processing apparatus, which is provided on a terminal side and includes:
a collecting module, configured to collect data sample information, where the data sample information includes at least one of input-related information and label-related information of an AI model, and the data sample information is used for training the AI model; and
a sending module, configured to send the data sample information to a server.

An embodiment of another aspect of the present disclosure provides a data processing apparatus, which is provided on a base station side and includes:
a collecting module, configured to collect assistance information corresponding to data sample information, where the assistance information corresponding to the data sample information is used to assist in training the AI model; and
a sending module, configured to perform at least one of following operations:
   sending the assistance information corresponding to the data sample information to a server;
   sending the assistance information corresponding to the data sample information to a terminal; and
   sending the assistance information corresponding to the data sample information to a core network device.

An embodiment of another aspect of the present disclosure provides a data processing apparatus, which is provided on a core network device side and includes:
a receiving module, configured to receive data sample information and assistance information corresponding to the data sample information, where the data sample information is used for training an AI model, the assistance information corresponding to the data sample information is used to assist in training the AI model, and the data sample information includes at least one of input-related information and label-related information of the model; and
a sending module, configured to send the data sample information and the assistance information corresponding to the data sample information to a server.

An embodiment of another aspect of the present disclosure provides a data processing apparatus, which is provided on a server side and includes:
a receiving module, configured to receive data sample information and assistance information corresponding to the data sample information, where the data sample information is used for training an AI model, the assistance information corresponding to the data sample information is used to assist in training the AI model, and the data sample information includes at least one of input-related information and label-related information of the model.

An embodiment of another aspect of the present disclosure provides a terminal, which includes a processor and a memory, where the memory stores a computer program, and the processor executes the computer program stored in the memory to cause the apparatus to perform the method provided in the embodiment of one above aspect.

An embodiment of another aspect of the present disclosure provides a base station, which includes a processor and a memory, where the memory stores a computer program, and the processor executes the computer program stored in the memory to cause the apparatus to perform the method provided in the embodiment of one above aspect.

An embodiment of another aspect of the present disclosure provides a core network device, which includes a processor and a memory, where the memory stores a computer program, and the processor executes the computer program stored in the memory to cause the apparatus to perform the method provided in the embodiment of one above aspect.

An embodiment of another aspect of the present disclosure provides a server, which includes a processor and a memory, where the memory stores a computer program, and the processor executes the computer program stored in the memory to cause the apparatus to perform the method provided in the embodiment of one above aspect.

An embodiment of another aspect of the present disclosure provides a communication apparatus, including a processor and an interface circuit;
where the interface circuit is configured to receive code instructions and transmit the code instructions to the processor;
the processor is configured to execute the code instructions to perform the method provided in the embodiment of one above aspect.

An embodiment of another aspect of the present disclosure provides a computer-readable storage medium for storing instructions, and when the instructions are executed, the method provided in the embodiment of one above aspect is implemented.

An embodiment of another aspect of the present disclosure provides a data processing system, and the system includes:
a terminal, configured to execute the method provided in the embodiment of the above one aspect;
a base station, configured to execute the method provided in the embodiment of the above another aspect;
a core network device, configured to execute the method provided in the embodiment of the above another aspect; and
a server, configured to execute the method provided in the embodiment of the above another aspect.

In summary, in the embodiments of the present disclosure, data sample information is collected, where the data sample information includes at least one of input-related information and label-related information of an artificial intelligence (AI) model, and the data sample information is used for training the AI model; and the data sample information is sent to a server. In the embodiments of the present disclosure, a data processing mechanism can be provided. When a terminal collects data sample information, the data sample information can be sent to a server, which provides a collection process for the data sample information, reduces the situation where the data collection node cannot be determined, and improves the convenience of data processing. The present disclosure provides a processing method for a "data processing" situation, so that when data sample information is collected, the data sample information can be sent to the server, thereby reducing the situation where the data sample information collection process cannot be determined, and improving the convenience of data processing.

### BRIEF DESCRIPTION OF THE DRAWINGS

The above and/or additional aspects and advantages of the present disclosure will become apparent and readily understood from the following description of the embodiments with reference to the accompanying drawings.
FIG. 1 is a schematic flow chart of a data processing method provided by an embodiment of the present disclosure.
FIG. 2 is a schematic flow chart of a data processing method provided by yet another embodiment of the present disclosure.
FIG. 3 is a schematic flow chart of a data processing method provided by yet another embodiment of the present disclosure.
FIG. 4 is a schematic interaction diagram of a data processing method provided by yet another embodiment of the present disclosure.
FIG. 5 is a schematic flow chart of a data processing method provided by yet another embodiment of the present disclosure.
FIG. 6 is a schematic interaction diagram of a data processing method provided by yet another embodiment of the present disclosure.
FIG. 7 is a schematic flow chart of a data processing method provided by yet another embodiment of the present disclosure.
FIG. 8 is a schematic interaction diagram of a data processing method provided by yet another embodiment of the present disclosure.
FIG. 9 is a schematic flow chart of a data processing method provided by yet another embodiment of the present disclosure.
FIG. 10 is a schematic interaction diagram of a data processing method provided by yet another embodiment of the present disclosure.
FIG. 11 is a schematic flow chart of a data processing method provided by yet another embodiment of the present disclosure.
FIG. 12 is a schematic interaction diagram of a data processing method provided by yet another embodiment of the present disclosure.
FIG. 13 is a schematic flow chart of a data processing method provided by yet another embodiment of the present disclosure.
FIG. 14 is a schematic flow chart of a data processing method provided by yet another embodiment of the present disclosure.
FIG. 15 is a schematic flow chart of a data processing method provided by yet another embodiment of the present disclosure.
FIG. 16 is a schematic flow chart of a data processing method provided by yet another embodiment of the present disclosure.
FIG. 17 is a schematic flow chart of a data processing method provided by yet another embodiment of the present disclosure.
FIG. 18 is a schematic flow chart of a data processing method provided by yet another embodiment of the present disclosure.
FIG. 19 is a schematic flow chart of a data processing method provided by yet another embodiment of the present disclosure.
FIG. 20 is a schematic interaction diagram of a data processing method provided by yet another embodiment of the present disclosure.
FIG. 21 is a schematic flow chart of a data processing method provided by yet another embodiment of the present disclosure.
FIG. 22 is a schematic flow chart of a data processing method provided by yet another embodiment of the present disclosure.
FIG. 23 is a schematic flow chart of a data processing method provided by yet another embodiment of the present disclosure.
FIG. 24 is a schematic interaction diagram of a data processing method provided by yet another embodiment of the present disclosure.
FIG. 25 is a schematic flow chart of a data processing method provided by yet another embodiment of the present disclosure.
FIG. 26 is a schematic interaction diagram of a data processing method provided by yet another embodiment of the present disclosure.
FIG. 27 is a schematic flow chart of a data processing method provided by yet another embodiment of the present disclosure.
FIG. 28 is a schematic flow chart of a data processing method provided by yet another embodiment of the present disclosure.
FIG. 29 is a schematic flow chart of a data processing method provided by yet another embodiment of the present disclosure.
FIG. 30 is a schematic flow chart of a data processing method provided by yet another embodiment of the present disclosure.
FIG. 31 is a schematic flow chart of a data processing method provided by yet another embodiment of the present disclosure.
FIG. 32 is a schematic flow chart of a data processing method provided by yet another embodiment of the present disclosure.
FIG. 33 is a schematic flow chart of a data processing method provided by yet another embodiment of the present disclosure.
FIG. 34 is a schematic interaction diagram of a data processing method provided by yet another embodiment of the present disclosure.
FIG. 35 is a schematic flow chart of a data processing method provided by yet another embodiment of the present disclosure.
FIG. 36 is a schematic interaction diagram of a data processing method provided by yet another embodiment of the present disclosure.
FIG. 37 is a schematic flow chart of a data processing method provided by yet another embodiment of the present disclosure.
FIG. 38 is a schematic interaction diagram of a data processing method provided by yet another embodiment of the present disclosure.
FIG. 39 is a schematic flow chart of a data processing method provided by yet another embodiment of the present disclosure.
FIG. 40 is a schematic flow chart of a data processing method provided by yet another embodiment of the present disclosure.
FIG. 41 is a schematic flow chart of a data processing method provided by yet another embodiment of the present disclosure.
FIG. 42 is a schematic flow chart of a data processing method provided by yet another embodiment of the present disclosure.
FIG. 43 is a schematic interaction diagram of a data processing method provided by yet another embodiment of the present disclosure.
FIG. 44 is a schematic flow chart of a data processing method provided by yet another embodiment of the present disclosure.
FIG. 45 is a schematic diagram of a structure of a data processing apparatus provided by one embodiment of the present disclosure.
FIG. 46 is a schematic diagram of a structure of a data processing apparatus provided by another embodiment of the present disclosure.
FIG. 47 is a schematic diagram of a structure of a data processing apparatus provided by another embodiment of the present disclosure.
FIG. 48 is a schematic diagram of a structure of a data processing apparatus provided by another embodiment of the present disclosure.
FIG. 49 is a schematic diagram of a structure of a data processing system provided by an embodiment of the present disclosure.
FIG. 50 is a block diagram of a terminal provided by an embodiment of the present disclosure.
FIG. 51 is a block diagram of a network side device provided by an embodiment of the present disclosure.

### DETAILED DESCRIPTION

Exemplary embodiments will be described in detail herein, examples of which are illustrated in the accompanying drawings. When the following description refers to the accompanying drawings, the same numbers in different drawings represent the same or similar elements unless otherwise represented. The implementations set forth in the following description of illustrative embodiments do not represent all implementations consistent with embodiments of the present disclosure. Instead, they are merely examples of apparatuses and methods consistent with some aspects related to embodiments of the present disclosure as recited in the appended claims.

Terms used herein in embodiments of the present application are only for the purpose of describing specific embodiments, but should not be construed to limit the present disclosure. As used in the embodiments of the present application and the appended claims, "a/an", "said" and "the" in singular forms are intended to include plural forms, unless clearly indicated in the context otherwise. It should also be understood that, the term "and/or" used herein represents and contains any or all possible combinations of one or more associated listed items.

It should be understood that although the terms first, second, third, etc. may be used to describe various information in the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" and "in case" as used herein may be interpreted as "when..." or "upon..." or "in response to determining that".

In the embodiments of the present disclosure, the network elements or network functions involved may be implemented by independent hardware devices or by software in hardware devices, which is not limited in the embodiments of the present disclosure.

With the development of communication technology, the widespread application of 5G technology has brought enormous changes to all aspects of people's lives. 5G will permeate all areas of the future society and establish a comprehensive information ecosystem with users as the center. The 5G user experience rate may reach 100Mbit/s~1Gbit/s, which can support extreme service experiences such as mobile virtual reality. The peak rate of 5G may reach 10Gbit/s~20Gbit/s, and the traffic density may reach 10Mbit/s/m2, which can support the growth of more than a thousand times of mobile service traffic in the future. The 5G connection density may reach 1 million/m2, which can effectively support massive IoT devices. The 5G transmission delay may reach the millisecond level, which can meet the stringent requirements of vehicle networking and industrial control. 5G may support a moving speed of 500km/h, which can ensure a good user experience in the high-speed rail environment. Therefore, as a representative of new infrastructure, 5G will rebuild the future information-based society.

In recent years, artificial intelligence (AI) technology has achieved continuous breakthroughs in many fields. The continuous development of intelligent voice, computer vision and other fields has not only brought a rich variety of applications to smart terminals but has also been widely used in numerous sectors including education, transportation, home living, healthcare, retail, and security. While bringing convenience to people's lives, it is also promoting industrial upgrading across various industries. AI technologies are accelerating their interdisciplinary convergence with diverse scientific domains. While advancing and integrating knowledge from different disciplines, AI also provides new directions and methods for the development of these disciplines.

In the Release 18 phase of the 3rd Generation Partnership Project (3GPP), a research project on artificial intelligence technology in wireless air interface was established by RAN1. The project aims to investigate how to introduce artificial intelligence technology into wireless air interface and explore how artificial intelligence technology can assist in improving the transmission technology of wireless air interface.

In wireless AI, applications of AI include but are not limited to AI-based channel state information (CSI) enhancement, AI-based beam management, and AI-based positioning, etc. The training of the AI model requires collecting data sets from a plurality of terminals. When the collection node for the data sets and the collection nodes for the assistance information corresponding to the data sets are different, how to clarify the data processing mechanism becomes an urgent problem to be solved.

The data processing method and apparatus, device, and storage medium provided by the embodiments of the present disclosure are described in detail below with reference to the accompanying drawings.

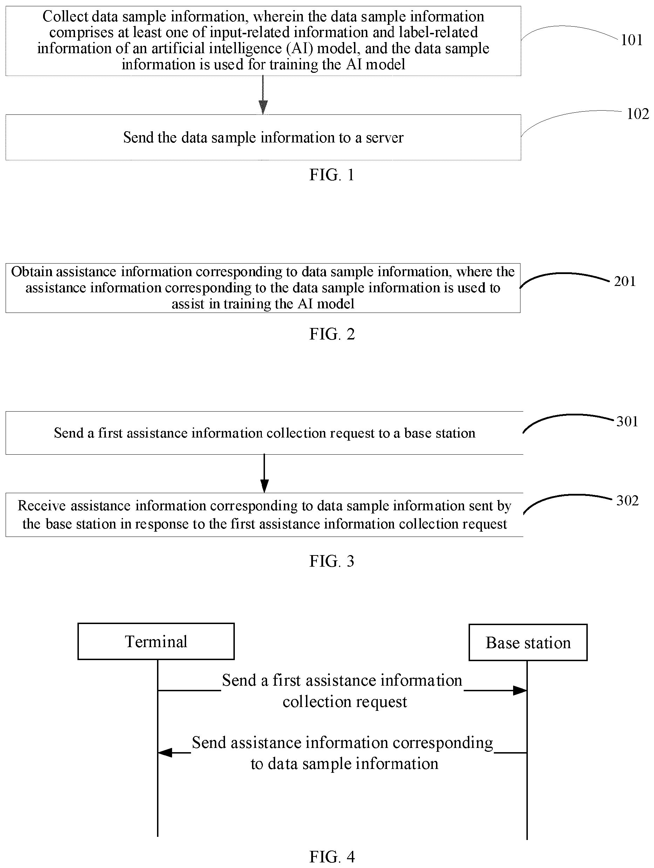

FIG. 1 is a schematic flow chart of a data processing method provided by an embodiment of the present disclosure. The method is executed by a terminal. As shown in FIG. 1, the method may include the following steps.

In step 101, data sample information is collected, where the data sample information includes at least one of input-related information and label-related information of an artificial intelligence (AI) model, and the data sample information is used for training the AI model; and

In step 102, the data sample information is sent to a server.

It should be noted that, in an embodiment of the present disclosure, the terminal may be a device that provides voice and/or data connectivity to a user. The terminal may communicate with one or more core networks via a radio access network (RAN). The terminal may be an Internet of Things (IoT) user equipment, such as a sensor device, a mobile phone (or a "cellular" phone), and a computer with an IoT user equipment, for example, it may be a fixed, portable, pocket-sized, handheld, computer-built-in, or vehicle-mounted apparatus, e.g., a station (STA), a subscriber unit, a subscriber station, a mobile station, a mobile, a remote station, an access point, a remote user equipment (remote terminal), an access user equipment (access terminal), a user terminal or a user equipment. Alternatively, the terminal may be a device of an unmanned aerial vehicle. Alternatively, the terminal may be a vehicle-mounted device, for example, it may be a trip computer with a wireless communication function, or a wireless user equipment externally connected to a trip computer. Alternatively, the terminal may be a roadside device, for example, a street lamp, a signal lamp, or other roadside device with a wireless communication function.

In one embodiment of the present disclosure, data sample information refers to information used for training an AI model. The data sample information does not specifically refer to a fixed information. For example, when the input-related information of the AI model included in the data sample information changes, the data sample information may also change accordingly.

In one embodiment of the present disclosure, the collected input-related information and/or label-related information of the AI model may be directly used for training the AI model, or the collected input-related information and/or label-related information of the AI model may be processed, and the processed collected input-related information and/or label-related information of the AI model may be used for training the AI model.

Additionally, in an embodiment of the present disclosure, for example, the terminal may also send the data sample information to a base station. The base station may send the data sample information directly to a core network device. The base station may also encapsulate the data sample information and the assistance information corresponding to the data sample information collected by the base station, and send the encapsulated data sample information and the assistance information corresponding to the data sample information to the core network device.

In an embodiment of the present disclosure, the technical solution of the embodiment of the present disclosure may be applied to the scenario in which the server trains the AI model.

In an embodiment of the present disclosure, the method further includes:
acquiring assistance information corresponding to the data sample information, where the assistance information corresponding to the data sample information is used to assist in training the AI model.

In one embodiment of the present disclosure, the assistance information corresponding to the data sample information refers to information used to assist training the AI model. The assistance information corresponding to the data sample information does not specifically refer to a fixed information. The assistance information corresponding to the data sample information includes but is not limited to the beam configuration of the base station, the identifier of the current cell, the scene of the terminal, etc. For example, when the data sample information changes, the assistance information corresponding to the data sample information may also change accordingly.

For example, in an embodiment of the present disclosure, where acquiring, by the terminal, assistance information corresponding to the data sample information includes:
sending a first assistance information collection request to a base station; and
receiving the assistance information corresponding to the data sample information sent by the base station in response to the first assistance information collection request.

In one embodiment of the present disclosure, the first assistance information collection request refers to a request sent by a terminal to a base station for collecting the assistance information corresponding to data sample information. The first assistance information collection request does not specifically refer to a fixed request. For example, when the request time point corresponding to the assistance information collection request changes, the first assistance information collection request may also change accordingly. For example, when the data sample information collected by the terminal changes, the assistance information corresponding to the data sample information may also change accordingly, and therefore the first assistance information collection request may also change accordingly.

Furthermore, in an embodiment of the present disclosure, the method further includes:
sending the data sample information and the assistance information corresponding to the data sample information to the server.

In one embodiment of the present disclosure, when the terminal collects data sample information and assistance information corresponding to the data sample information, the terminal may encapsulate the data sample information and the assistance information corresponding to the data sample information, and send the encapsulated data sample information and assistance information corresponding to the data sample information to the server.

In an embodiment of the present disclosure, the method further includes:
sending the data sample information and the assistance information corresponding to the data sample information to a base station.

In one embodiment of the present disclosure, when the terminal collects data sample information and assistance information corresponding to the data sample information, the terminal may encapsulate the data sample information and the assistance information corresponding to the data sample information, and send the encapsulated data sample information and assistance information corresponding to the data sample information to the base station. The base station may send the encapsulated data sample information and assistance information corresponding to the data sample information to the core network device. The work done by the base station is only forwarding, and the data sample information and the assistance information corresponding to the data sample information are not processed by the base station.

In an embodiment of the present disclosure, the method further includes:
receiving first configuration information sent by the server; and
collecting the data sample information based on the first configuration information.

For example, in one embodiment of the present disclosure, the first configuration information may be, for example, the input-related information and label-related information for configuring the terminal to collect the data sample information. The first configuration information does not specifically refer to a fixed information. The term "first" in the first configuration information is only used to distinguish it from other configuration information. For example, when the AI model changes, the first configuration information may also change accordingly.

For example, in one embodiment of the present disclosure, the terminal may receive first configuration information sent by the server.

Furthermore, in an embodiment of the present disclosure, the method further includes:
measuring a reference signal; and
collecting the data sample information based on a measurement result of the reference signal.

For example, in one embodiment of the present disclosure, the terminal may measure the reference signal and collect the data sample information based on the measurement result of the reference signal. For example, the reference signal may be used to assist the terminal in collecting the data sample information.

In summary, in the embodiments of the present disclosure, the data sample information is collected, where the data sample information includes at least one of input-related information and label-related information of an artificial intelligence (AI) model, and the data sample information is used for training the AI model; and the data sample information is sent to a server. In the embodiments of the present disclosure, a data processing mechanism can be provided. When a terminal collects data sample information, the data sample information can be sent to a server, which provides a collection process for the data sample information, reduces the situation where the data collection node cannot be determined, and improves the convenience of data processing. The present disclosure provides a processing method for a "data processing" situation, so that when data sample information is collected, the data sample information can be sent to the server, thereby reducing the situation where the data sample information collection process cannot be determined, and improving the convenience of data processing.

FIG. 2 is a schematic flow chart of a data processing method provided by an embodiment of the present disclosure. The method is executed by a terminal. As shown in FIG. 2, the method may include the following step.

In step 201, assistance information corresponding to data sample information is acquired, where the assistance information corresponding to the data sample information is used to assist in training the AI model.

In one embodiment of the present disclosure, different data sample information may correspond to different assistance information. The terminal may collect data sample information, and the terminal may also collect assistance information corresponding to the data sample information. The assistance information corresponding to the data sample information is used to assist in the training of the AI model.

Furthermore, in one embodiment of the present disclosure, the assistance information corresponding to the data sample information does not specifically refer to a fixed information. The assistance information corresponding to the data sample information includes but is not limited to the beam configuration of the base station, the identifier of the current cell, the scenario of the terminal, etc. For example, when the data sample information changes, the assistance information corresponding to the data sample information may also change accordingly.

In summary, in the embodiment of the present disclosure, assistance information corresponding to the data sample information is acquired, where the assistance information corresponding to the data sample information is used to assist in the training of the AI model. In the embodiment of the present disclosure, a data processing mechanism may be provided, and a collection process of assistance information corresponding to the data sample information may be provided, thereby reducing the situation where the data collection node cannot be determined, and improving the convenience of data processing. The present disclosure provides a processing method for a "data processing" situation, so that the assistance information corresponding to the data sample information can be collected, thereby reducing the situation where the collection process for the assistance information corresponding to the data sample information cannot be determined, and improving the convenience of data processing.

FIG. 3 is a schematic flow chart of a data processing method provided by an embodiment of the present disclosure. The method is executed by a terminal. As shown in FIG. 3, the method may include the following steps.

In step 301, a first assistance information collection request is sent to a base station.

In step 302, assistance information corresponding to data sample information sent by the base station in response to the first assistance information collection request is received.

Furthermore, in one embodiment of the present disclosure, FIG. 4 is a schematic interaction diagram of a data processing method provided by an embodiment of the present disclosure. As shown in FIG. 4, the terminal may send a first assistance information collection request to the base station. When the base station receives the first assistance information collection request, the base station may send the assistance information corresponding to the data sample information. The terminal may receive the assistance information corresponding to the data sample information sent by the base station in response to the first assistance information collection request.

In summary, in the embodiments of the present disclosure, a first assistance information collection request is sent to the base station; and the assistance information corresponding to the data sample information sent by the base station in response to the first assistance information collection request is received. In the embodiment of the present disclosure, a data processing mechanism can be provided, and a collection process of assistance information corresponding to the data sample information can be provided to reduce the situation where the data collection node cannot be determined, and the convenience of data processing can be improved. The embodiment of the present disclosure specifically illustrates the scheme for receiving the assistance information corresponding to the data sample information sent by the base station. The present disclosure provides a processing method for a "data processing" situation, so that the assistance information corresponding to the data sample information can be collected, thereby reducing the situation where the collection process for the assistance information corresponding to the data sample information cannot be determined, and improving the convenience of data processing.

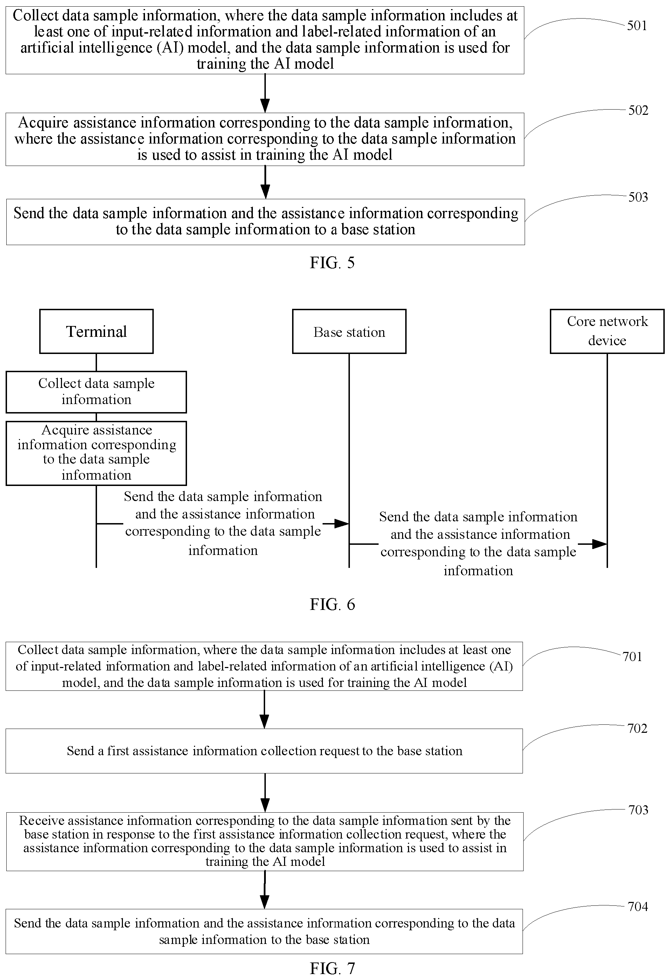

FIG. 5 is a schematic flow chart of a data processing method provided by an embodiment of the present disclosure. The method is executed by a terminal. As shown in FIG. 5, the method may include the following steps.

In step 501, data sample information is collected, where the data sample information includes at least one of input-related information and label-related information of an artificial intelligence (AI) model, and the data sample information is used for training the AI model.

In step 502, assistance information corresponding to the data sample information is acquired, where the assistance information corresponding to the data sample information is used to assist in training the AI model.

In step 503, the data sample information and the assistance information corresponding to the data sample information are sent to a base station.

In one embodiment of the present disclosure, the data sample information refers to information used for training the AI model. The data sample information does not specifically refer to a fixed information. For example, when the input-related information of the AI model included in the data sample information changes, the data sample information may also change accordingly.

In one embodiment of the present disclosure, the embodiment of the present disclosure specifies that the terminal sends the data sample information to the base station.

Furthermore, in an embodiment of the present disclosure, FIG. 6 is a schematic interaction diagram of a data processing method provided by an embodiment of the present disclosure. As shown in FIG. 6, the terminal may collect the data sample information, where the data sample information includes at least one of input-related information and label-related information of the artificial intelligence (AI) model, and the data sample information is used for training the AI model. The terminal may also collect the assistance information corresponding to the data sample information, where the assistance information corresponding to the data sample information is used to assist in the training of the AI model. When the terminal collects the data sample information and the assistance information corresponding to the data sample information, the terminal may send the data sample information and the assistance information corresponding to the data sample information to the base station. The base station may send the data sample information and the assistance information corresponding to the data sample information to the core network device. The base station only forwards the data and does not process the data sample information or the assistance information corresponding to the data sample information.

Furthermore, in one embodiment of the present disclosure, when the terminal collects the data sample information and the assistance information corresponding to the data sample information, the terminal may encapsulate the data sample information and the assistance information corresponding to the data sample information, and then send the encapsulated data sample information and assistance information corresponding to the data sample information to the base station. The base station may send the encapsulated data sample information and assistance information corresponding to the data sample information to the core network device. The work done by the base station is only forwarding, and the data sample information and the assistance information corresponding to the data sample information are not processed by the base station.

In summary, in the embodiment of the present disclosure, data sample information is collected, where the data sample information includes at least one of input-related information and label-related information of an artificial intelligence (AI) model, and the data sample information is used for training the AI model; assistance information corresponding to the data sample information is collected, where the assistance information corresponding to the data sample information is used to assist in the training of the AI model; and the data sample information and the assistance information corresponding to the data sample information are sent to the server. In the embodiment of the present disclosure, a data processing mechanism can be provided. When the terminal collects the data sample information and the assistance information corresponding to the data sample information, the data sample information and the assistance information corresponding to the data sample information can be sent to the core network device, and a collection process of the data sample information can be provided to reduce the situation where the data collection node cannot be determined, and the convenience of data processing can be improved. The present disclosure provides a processing method for a "data processing" situation. When the terminal collects the data sample information and the assistance information corresponding to the data sample information, the data sample information and the assistance information corresponding to the data sample information can be sent to the base station, thereby reducing the situation where the data sample information collection process cannot be determined, and improving the convenience of data processing.

FIG. 7 is a schematic flow chart of a data processing method provided by an embodiment of the present disclosure. The method is executed by a terminal. As shown in FIG. 7, the method may include the following steps.

In step 701, data sample information is collected, where the data sample information includes at least one of input-related information and label-related information of an artificial intelligence (AI) model, and the data sample information is used for training the AI model.

In step 702, a first assistance information collection request is sent to the base station.

In step 703, assistance information corresponding to the data sample information sent by the base station in response to the first assistance information collection request is received, where the assistance information corresponding to the data sample information is used to assist in training the AI model.

In step 704, the data sample information and the assistance information corresponding to the data sample information are sent to the base station.

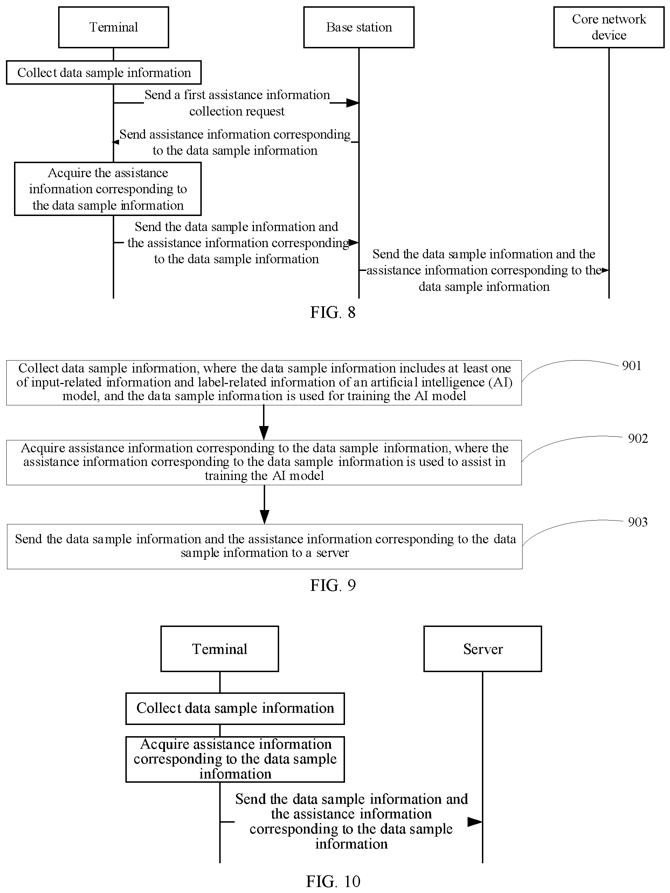

Furthermore, in an embodiment of the present disclosure, FIG. 8 is a schematic interaction diagram of a data processing method provided by an embodiment of the present disclosure. As shown in FIG. 8, the terminal may collect the data sample information, where the data sample information includes at least one of input-related information and label-related information of the artificial intelligence (AI) model, and the data sample information is used for training the AI model. The terminal may send a first assistance information collection request to the base station, and the terminal may receive the assistance information corresponding to the data sample information sent by the base station in response to the first assistance information collection request, where the assistance information corresponding to the data sample information is used to assist in the training of the AI model. When the terminal collects the data sample information and the assistance information corresponding to the data sample information, the terminal may send the data sample information and the assistance information corresponding to the data sample information to the base station. The base station may send the data sample information and the assistance information corresponding to the data sample information to the core network device. The work done by the base station is only forwarding, and the data sample information and the assistance information corresponding to the data sample information are not processed by the base station.

In summary, in the embodiment of the present disclosure, data sample information is collected, where the data sample information includes at least one of input-related information and label-related information of an artificial intelligence (AI) model, and the data sample information is used for training the AI model; assistance information corresponding to the data sample information is collected, where the assistance information corresponding to the data sample information is used to assist in the training of the AI model; and the data sample information and the assistance information corresponding to the data sample information are sent to the base station. In the embodiment of the present disclosure, a data processing mechanism can be provided. When the terminal collects the data sample information and the assistance information corresponding to the data sample information, the data sample information and the assistance information corresponding to the data sample information can be sent to the base station, and a collection process of the data sample information can be provided to reduce the situation where the data collection node cannot be determined, and the convenience of data processing can be improved. The embodiment of the present disclosure specifically describes the scheme for receiving the assistance information corresponding to the data sample information sent by the base station. The present disclosure provides a processing method for a "data processing" situation. When the terminal collects the data sample information and the assistance information corresponding to the data sample information, the data sample information and the assistance information corresponding to the data sample information can be sent to the base station, thereby reducing the situation where the data sample information collection process cannot be determined, and improving the convenience of data processing.

FIG. 9 is a schematic flow chart of a data processing method provided by an embodiment of the present disclosure. The method is executed by a terminal. As shown in FIG. 9, the method may include the following steps.

In step 901, data sample information is collected, where the data sample information includes at least one of input-related information and label-related information of an artificial intelligence (AI) model, and the data sample information is used for training the AI model.

In step 902, assistance information corresponding to the data sample information is acquired, where the assistance information corresponding to the data sample information is used to assist in training the AI model.

In step 903, the data sample information and the assistance information corresponding to the data sample information are sent to a server.

In one embodiment of the present disclosure, the data sample information refers to information used for training the AI model. The data sample information does not specifically refer to a fixed information. For example, when the input-related information of the AI model included in the data sample information changes, the data sample information may also change accordingly.

In one embodiment of the present disclosure, the embodiment of the present disclosure specifies that the terminal sends the data sample information to the server.

Furthermore, in an embodiment of the present disclosure, FIG. 10 is a schematic interaction diagram of a data processing method provided by an embodiment of the present disclosure. As shown in FIG. 10, the terminal may collect data sample information, where the data sample information includes at least one of input-related information and label-related information of the artificial intelligence (AI) model, and the data sample information is used for training the AI model. The terminal may also collect assistance information corresponding to the data sample information, where the assistance information corresponding to the data sample information is used to assist in the training of the AI model. When the terminal collects the data sample information and the assistance information corresponding to the data sample information, the terminal may send the data sample information and the assistance information corresponding to the data sample information to the server.

Furthermore, in an embodiment of the present disclosure, when a terminal collects the data sample information and the assistance information corresponding to the data sample information, the terminal may encapsulate the data sample information and the assistance information corresponding to the data sample information, and then send the encapsulated data sample information and assistance information corresponding to the data sample information to the server.

In summary, in the embodiment of the present disclosure, the data sample information is collected, where the data sample information includes at least one of input-related information and label-related information of an artificial intelligence (AI) model, and the data sample information is used for training the AI model; assistance information corresponding to the data sample information is collected, where the assistance information corresponding to the data sample information is used to assist in the training of the AI model; and the data sample information and the assistance information corresponding to the data sample information are sent to the server. In the embodiment of the present disclosure, a data processing mechanism can be provided. When the terminal collects the data sample information and the assistance information corresponding to the data sample information, the data sample information and the assistance information corresponding to the data sample information can be sent to the server, and a collection process of the data sample information can be provided to reduce the situation where the data collection node cannot be determined, and the convenience of data processing can be improved. The present disclosure provides a processing method for a "data processing" situation. When the terminal collects data sample information and assistance information corresponding to the data sample information, the data sample information and the assistance information corresponding to the data sample information can be sent to the server, thereby reducing the situation where the data sample information collection process cannot be determined, and improving the convenience of data processing.

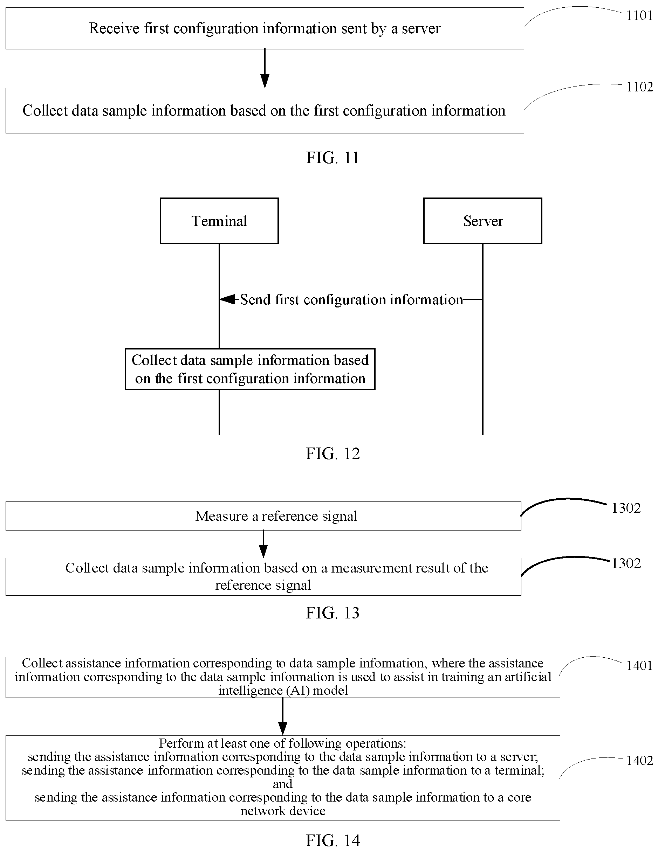

FIG. 11 is a schematic flow chart of a data processing method provided by an embodiment of the present disclosure. The method is executed by a terminal. As shown in FIG. 11, the method may include the following steps.

In step 1101, first configuration information sent by the server is received;
In step 1102, data sample information is collected based on the first configuration information.

For example, in one embodiment of the present disclosure, the first configuration information may include, for example, configuration for collecting the input-related information and label-related information of data sample information. The first configuration information does not specifically refer to a fixed information. The term "first" in the first configuration information is only used to distinguish it from other configuration information. For example, when the AI model changes, the first configuration information may also change accordingly.

Furthermore, in one embodiment of the present disclosure, FIG. 12 is a schematic interaction diagram of a data processing method provided by an embodiment of the present disclosure. As shown in FIG. 12, the terminal may receive the first configuration information sent by the server. The terminal may collect the data sample information based on the first configuration information.

In summary, in the embodiment of the present disclosure, the first configuration information sent by the server is received; and data sample information is collected based on the first configuration information. In the embodiment of the present disclosure, a data processing mechanism can be provided, and data sample information may be collected based on the first configuration information. A collection process of data sample information can be provided to reduce the situation where the server cannot determine the data collection node, and the accuracy of data collection can be improved. The present disclosure provides a processing method for a "data processing" situation, so that the data sample information can be collected based on the first configuration information, and a collection process of data sample information can be provided to improve the accuracy of data collection.

FIG. 13 is a schematic flow chart of a data processing method provided by an embodiment of the present disclosure. The method is executed by a terminal. As shown in FIG. 13, the method may include the following steps.

In step 1301, a reference signal is measured.

In step 1302, data sample information is collected based on a measurement result of the reference signal.

In summary, in the embodiment of the present disclosure, a reference signal is measured; and data sample information is collected based on a measurement result of the reference signal. In the embodiment of the present disclosure, a data processing mechanism can be provided, and data sample information may be collected based on the measurement result of the reference signal. A collection process for data sample information can be provided to reduce the situation where the data collection node cannot be determined, and the convenience of data processing can be improved. The present disclosure provides a processing method for a "data processing" situation, in which data sample information is collected based on the measurement result of the reference signal, which can reduce the situation where the data sample information collection process cannot be determined and improve the convenience of data processing.

FIG. 14 is a schematic flow chart of a data processing method provided by an embodiment of the present disclosure. The method is executed by a base station. As shown in FIG. 14, the method may include the following steps.

In step 1401, assistance information corresponding to data sample information is collected, where the assistance information corresponding to the data sample information is used to assist in training an artificial intelligence (AI) model.

In step 1402, at least one of the following is performed:
sending the assistance information corresponding to the data sample information to a server;
sending the assistance information corresponding to the data sample information to a terminal; and
sending the assistance information corresponding to the data sample information to a core network device.

In one embodiment of the present disclosure, the assistance information corresponding to the data sample information refers to information used to assist in training the AI model. The assistance information corresponding to the data sample information does not specifically refer to a fixed information. The assistance information corresponding to the data sample information includes but is not limited to the beam configuration of the base station, the identification of the current cell, the scene of the terminal, etc. For example, when the data sample information changes, the assistance information corresponding to the data sample information may also change accordingly.

In one embodiment of the present disclosure, the technical solution of the embodiment of the present disclosure may be applied to the scenario where the server trains the AI model.

Furthermore, in one embodiment of the present disclosure, the assistance information corresponding to the data sample information is collected by the base station.

For example, in an embodiment of the present disclosure, the method further includes:
receiving a first assistance information collection request sent by the terminal; and
sending, in response to the first assistance information collection request, the assistance information corresponding to the data sample information to the terminal.

In one embodiment of the present disclosure, the first assistance information collection request refers to a request sent by a terminal to a base station for collecting the assistance information corresponding to data sample information. The first assistance information collection request does not specifically refer to a fixed request. For example, when the request time point corresponding to the first assistance information collection request changes, the first assistance information collection request may also change accordingly. For example, when the data sample information collected by the terminal changes, the assistance information corresponding to the first data sample information may also change accordingly, and therefore the first assistance information collection request may also change accordingly.

In one embodiment of the present disclosure, when the base station collects the assistance information corresponding to the data sample information, the base station may send the assistance information corresponding to the data sample information to the server.

For example, in an embodiment of the present disclosure, sending the assistance information corresponding to the data sample information to the server includes:
receiving a second assistance information collection request sent by the server; and
sending, in response to the second assistance information collection request, the assistance information corresponding to the data sample information is sent to the server.

For example, in one embodiment of the present disclosure, the second assistance information collection request refers to a request sent by the server to the base station for collecting the assistance information corresponding to the data sample information. The second assistance information collection request is only used to distinguish from other assistance information collection requests.

In one embodiment of the present disclosure, when the base station collects the assistance information corresponding to the data sample information, the base station may send the assistance information corresponding to the data sample information to the core network device.

For example, in an embodiment of the present disclosure, the method further includes:
receiving second configuration information sent by the core network device; and
collecting the assistance information corresponding to the data sample information based on the second configuration information.

For example, in one embodiment of the present disclosure, the second configuration information refers to the configuration information sent by the core network device to the base station. The second configuration information is used to configure the base station to collect the assistance information corresponding to the data sample information. The second configuration information does not specifically refer to a fixed configuration information. The term "second" in the second configuration information is only used to distinguish it from other configuration information. For example, when the collection time point of the assistance information changes, the second configuration information may also change accordingly. For example, when the specific information included in the assistance information corresponding to the data sample information changes, the second configuration information may also change accordingly.

In one embodiment of the present disclosure, the method further includes:
receiving the data sample information sent by the terminal, where the data sample information includes at least one of input-related information and label-related information of the AI model, and the data sample information is used for training the AI model; and
sending the data sample information and the assistance information corresponding to the data sample information to the core network device.

Furthermore, in one embodiment of the present disclosure, data sample information refers to data sample information collected by a terminal. The base station may receive the data sample information sent by the terminal. When the base station collects the assistance information corresponding to the data sample information and receives data sample information sent by the terminal, the base station may encapsulate the data sample information and the assistance information corresponding to the data sample information, and send the encapsulated data sample information and assistance information corresponding to the data sample information to the core network device.

In an embodiment of the present disclosure, the method further includes:
receiving encapsulated data sample information and assistance information corresponding to the data sample information sent by a terminal, where the data sample information includes at least one of input-related information and label-related information of the AI model, and the data sample information is used for training the AI model; and
sending the encapsulated data sample information and assistance information corresponding to the data sample information to the core network device.

In an embodiment of the present disclosure, the method further includes:
sending third configuration information to the terminal, where the third configuration information is used to configure the terminal to collect the data sample information.

For example, in one embodiment of the present disclosure, the third configuration information is used to configure the terminal to collect the data sample information. The third configuration information may include, for example, the configuration for collecting the input-related information and label-related information of the data sample information. The third configuration information does not specifically refer to a fixed information. The term "third" in the third configuration information is only used to distinguish it from other configuration information. For example, when the AI model changes, the third configuration information may also change accordingly.

Furthermore, in an embodiment of the present disclosure, the method further includes:
receiving fourth configuration information sent by the core network device; and
determining the third configuration information based on the fourth configuration information.

For example, in one embodiment of the present disclosure, the fourth configuration information may be configuration information sent by the core network device to the base station. The fourth configuration information refers to the configuration information used by the base station to determine the third configuration information. The term "fourth" in the fourth configuration information is only used to distinguish it from the other configuration information and does not specifically refer to a certain fixed configuration information.

In an embodiment of the present disclosure, the method further includes:
sending a reference signal to a terminal, where the reference signal is used to assist in collecting the data sample information.

For example, in one embodiment of the present disclosure, the reference signal is used to assist in collecting the data sample information. Since the collection of data sample information is performed by the terminal, the reference signal is used to assist the terminal in collecting the data sample information.

For example, in an embodiment of the present disclosure, sending the reference signal to the terminal includes:
receiving fifth configuration information sent by the core network device; and
sending the reference signal to the terminal based on the fifth configuration information.

Furthermore, in one embodiment of the present disclosure, the fifth configuration information refers to information used to configure a reference signal. The term "fifth" in the fifth configuration information is only used to distinguish it from other configuration information, and does not specifically refer to a certain fixed configuration information.

In summary, in the embodiments of the present disclosure, the assistance information corresponding to data sample information is collected, where the assistance information corresponding to the data sample information is used to assist in training the artificial intelligence (AI) model; and at least one of the following operations is performed: the assistance information corresponding to the data sample information is sent to the server; the assistance information corresponding to the data sample information is sent to the terminal; and the assistance information corresponding to the data sample information is sent to the core network device. In the embodiments of the present disclosure, a data processing mechanism can be provided to clarify that the assistance information corresponding to the data sample information is collected by the base station, and a collection process of the assistance information corresponding to the data sample information can be provided, so as to reduce the situation where the data collection node cannot be determined, and the convenience of data processing can be improved. The present disclosure provides a processing method for a "data processing" situation, so as to clarify that the assistance information corresponding to the data sample information is collected by the base station, and a collection process of the assistance information corresponding to the data sample information can be provided, so as to reduce the situation where the collection process of the assistance information corresponding to the data sample information cannot be determined, and improve the convenience of data processing.

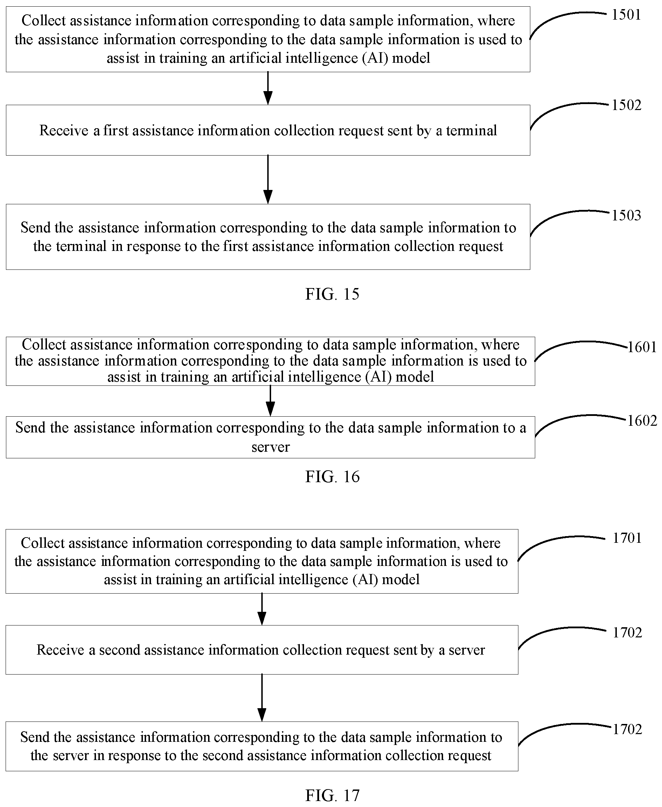

FIG. 15 is a schematic flow chart of a data processing method provided by an embodiment of the present disclosure. The method is executed by a base station. As shown in FIG. 15, the method may include the following steps.

In step 1501, assistance information corresponding to data sample information is collected, where the assistance information corresponding to the data sample information is used to assist in training an artificial intelligence (AI) model;
In step 1502, a first assistance information collection request sent by a terminal is received.

In step 1503, the assistance information corresponding to the data sample information is sent to the terminal in response to the first assistance information collection request.

In one embodiment of the present disclosure, the assistance information corresponding to the data sample information refers to information used to assist in training the AI model. The assistance information corresponding to the data sample information does not specifically refer to a fixed information. The assistance information corresponding to the data sample information includes but is not limited to the beam configuration of the base station, the identification of the current cell, the scene of the terminal, etc. For example, when the data sample information changes, the assistance information corresponding to the data sample information may also change accordingly.

In one embodiment of the present disclosure, the first assistance information collection request refers to a request for collecting the assistance information corresponding to the data sample information. The first assistance information collection request does not specifically refer to a fixed request. For example, when the request time point corresponding to the first assistance information collection request changes, the first assistance information collection request may also change accordingly. For example, when the data sample information collected by the terminal changes, the assistance information corresponding to the data sample information may also change accordingly, and therefore the first assistance information collection request may also change accordingly.

In summary, in the embodiment of the present disclosure, the assistance information corresponding to the data sample information is collected, where the assistance information corresponding to the data sample information is used to assist the training of the artificial intelligence (AI) model, and a first assistance information collection request sent by the terminal is received; and the assistance information corresponding to the data sample information is sent to the terminal in response to the first assistance information collection request. In the embodiment of the present disclosure, a data processing mechanism can be provided to clarify that the base station collects the assistance information corresponding to the data sample information, and sends the assistance information corresponding to the data sample information to the terminal based on the first assistance information collection request. A collection process of the assistance information corresponding to the data sample information can be provided, which reduces the situation where the data collection node cannot be determined, and the convenience of data processing can be improved. The present disclosure provides a processing method for a "data processing" situation, so as to clarify that the base station collects the assistance information corresponding to the data sample information, and sends the assistance information corresponding to the data sample information to the terminal. A collection process of the assistance information corresponding to the data sample information can be provided, which reduces the situation where the collection process for the assistance information corresponding to the data sample information cannot be determined, and improves the convenience of data processing.

FIG. 16 is a schematic flow chart of a data processing method provided by an embodiment of the present disclosure. The method is executed by a base station. As shown in FIG. 15, the method may include the following steps.

In step 1601, assistance information corresponding to data sample information is collected, where the assistance information corresponding to the data sample information is used to assist in training an artificial intelligence (AI) model.

In step 1602, the assistance information corresponding to the data sample information is sent to the server.

In one embodiment of the present disclosure, the assistance information corresponding to the data sample information refers to information used to assist the training of the AI model. The assistance information corresponding to the data sample information does not specifically refer to a fixed information. The assistance information corresponding to the data sample information includes but is not limited to the beam configuration of the base station, the identification of the current cell, the scene of the terminal, etc. For example, when the data sample information changes, the assistance information corresponding to the data sample information may also change accordingly.

In summary, in the embodiment of the present disclosure, the assistance information corresponding to the data sample information is collected, where the assistance information corresponding to the data sample information is used to assist the training of the artificial intelligence (AI) model, and the assistance information corresponding to the data sample information is sent to the server. In the embodiment of the present disclosure, a data processing mechanism can be provided to clarify that the base station collects the assistance information corresponding to the data sample information, and sends the assistance information corresponding to the data sample information to the core network device. A collection process of the data sample information and the assistance information corresponding to the data sample information can be provided, which reduces the situation where the core network device cannot determine the data collection node, and the convenience of data processing can be improved. The present disclosure provides a processing method for a "data processing" situation, so as to clarify that the base station collects the assistance information corresponding to the data sample information, and sends the assistance information corresponding to the data sample information to the core network device. A collection process for the data sample information and the assistance information corresponding to the data sample information can be provided, thereby reducing the situation where the collection process for the assistance information corresponding to the data sample information cannot be determined, and improving the convenience of data processing.

FIG. 17 is a schematic flow chart of a data processing method provided by an embodiment of the present disclosure. The method is executed by a base station. As shown in FIG. 17, the method may include the following steps.

In step 1701, assistance information corresponding to data sample information is collected, where the assistance information corresponding to the data sample information is used to assist in training an artificial intelligence (AI) model.

In step 1702, a second assistance information collection request sent by a server is received.

In step 1703, the assistance information corresponding to the data sample information is sent to the server in response to the second assistance information collection request.

In one embodiment of the present disclosure, the assistance information corresponding to the data sample information refers to information used to assist in training the AI model. The assistance information corresponding to the data sample information does not specifically refer to a fixed information. The assistance information corresponding to the data sample information includes but is not limited to the beam configuration of the base station, the identification of the current cell, the scene of the terminal, etc. For example, when the data sample information changes, the assistance information corresponding to the data sample information may also change accordingly.

In summary, in the embodiment of the present disclosure, the assistance information corresponding to the data sample information is collected, where the assistance information corresponding to the data sample information is used to assist the training of the artificial intelligence (AI) model, and the assistance information corresponding to the data sample information is sent to the server. In the embodiments of the present disclosure, a data processing mechanism can be provided to clarify that the base station collects the assistance information corresponding to the data sample information, and sends the assistance information corresponding to the data sample information to the core network device. A collection process for the data sample information and the assistance information corresponding to the data sample information can be provided, which reduces the situation where the core network device cannot determine the data collection node, and the convenience of data processing can be improved. The present disclosure provides a processing method for a "data processing" situation, so as to clarify that the base station collects the assistance information corresponding to the data sample information, and sends the assistance information corresponding to the data sample information to the core network device. A collection process for the data sample information and the assistance information corresponding to the data sample information can be provided, thereby reducing the situation where the collection process for the assistance information corresponding to the data sample information cannot be determined, and improving the convenience of data processing.

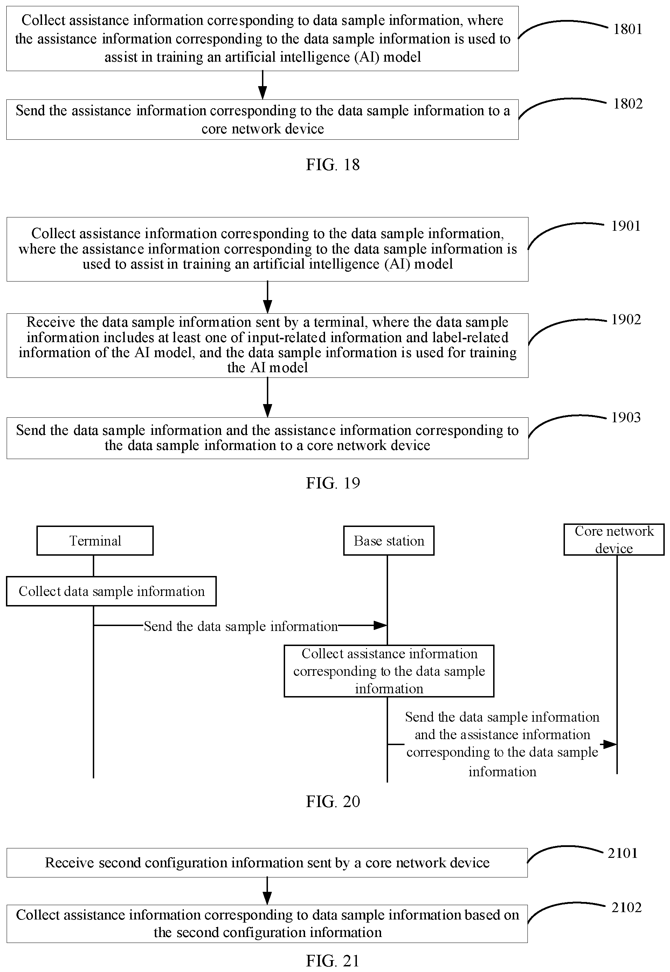

FIG. 18 is a schematic flow chart of a data processing method provided by an embodiment of the present disclosure. The method is executed by a base station. As shown in FIG. 18, the method may include the following steps.

In step 1801, assistance information corresponding to data sample information is collected, where the assistance information corresponding to the data sample information is used to assist in training an artificial intelligence (AI) model.

In step 1802, the assistance information corresponding to the data sample information is sent to a core network device.

In one embodiment of the present disclosure, the assistance information corresponding to the data sample information refers to information used to assist the training of the AI model. The assistance information corresponding to the data sample information does not specifically refer to a fixed information. The assistance information corresponding to the data sample information includes but is not limited to the beam configuration of the base station, the identification of the current cell, the scene of the terminal, etc. For example, when the data sample information changes, the assistance information corresponding to the data sample information may also change accordingly.

In summary, in the embodiment of the present disclosure, the assistance information corresponding to the data sample information is collected, where the assistance information corresponding to the data sample information is used to assist the training of the artificial intelligence (AI) model, and the assistance information corresponding to the data sample information is sent to the core network device. In the embodiments of the present disclosure, a data processing mechanism can be provided to clarify that the base station collects the assistance information corresponding to the data sample information, and sends the assistance information corresponding to the data sample information to the core network device. A collection process for the data sample information and the assistance information corresponding to the data sample information can be provided, which reduces the situation where the core network device cannot determine the data collection node, and the convenience of data processing can be improved. The present disclosure provides a processing method for a "data processing" situation, so as to clarify that the base station collects the assistance information corresponding to the data sample information, and sends the assistance information corresponding to the data sample information to the core network device. A collection process for the data sample information and the assistance information corresponding to the data sample information can be provided, thereby reducing the situation where the collection process for the assistance information corresponding to the data sample information cannot be determined, and improving the convenience of data processing.

FIG. 19 is a schematic flow chart of a data processing method provided by an embodiment of the present disclosure. The method is executed by a base station. As shown in FIG. 19, the method may include the following steps.

In step 1901, assistance information corresponding to the data sample information is collected, where the assistance information corresponding to the data sample information is used to assist in training an artificial intelligence (AI) model.

In step 1902, the data sample information sent by a terminal is received, where the data sample information includes at least one of input-related information and label-related information of the AI model, and the data sample information is used for training the AI model.

In step 1903, the data sample information and the assistance information corresponding to the data sample information are sent to a core network device.

In one embodiment of the present disclosure, data sample information refers to data sample information collected by the terminal. The base station may receive data sample information sent by the terminal. When the base station collects assistance information corresponding to the data sample information and receives data sample information sent by the terminal, the base station may encapsulate the data sample information and the assistance information corresponding to the data sample information, and send the encapsulated data sample information and assistance information corresponding to the data sample information to the core network device.

In one embodiment of the present disclosure, FIG. 20 is a schematic interaction diagram of a data processing method provided by an embodiment of the present disclosure. As shown in FIG. 20, the base station may collect assistance information corresponding to the data sample information. The base station may receive the data sample information sent by the terminal. When the base station collects the assistance information corresponding to the data sample information and receives the data sample information sent by the terminal, the base station may send the data sample information and the assistance information corresponding to the data sample information to the core network device.

The execution order of step 1901 and step 1902 is not limited.

In summary, in the embodiment of the present disclosure, the assistance information corresponding to data sample information is collected, where the assistance information corresponding to the data sample information is used to assist the training of the artificial intelligence (AI) model; the data sample information sent by the terminal is received, where the data sample information includes at least one of the input-related information and the label-related information of the AI model, and the data sample information is used for training the AI model; and the data sample information and the assistance information corresponding to the data sample information are sent to the core network device. In the embodiment of the present disclosure, a data processing mechanism can be provided to clarify that the base station collects the assistance information corresponding to the data sample information, and sends the data sample information and the assistance information corresponding to the data sample information to the core network device. A collection process for the data sample information and the assistance information corresponding to the data sample information can be provided, which reduces the situation where the core network device cannot determine the data collection node, and the convenience of data processing can be improved. The embodiment of the present disclosure specifically discloses a scheme for receiving the data sample information sent by the terminal. The present disclosure provides a processing method for a "data processing" situation, so as to clarify that the base station collects the assistance information corresponding to the data sample information, and sends the assistance information corresponding to the data sample information to the core network device. A collection process for the data sample information and the assistance information corresponding to the data sample information can be provided, thereby reducing the situation where the collection process for the assistance information corresponding to the data sample information cannot be determined, and improving the convenience of data processing.

FIG. 21 is a schematic flow chart of a data processing method provided by an embodiment of the present disclosure. The method is executed by a base station. As shown in FIG. 21, the method may include the following steps.

In step 2101, second configuration information sent by a core network device is received.

In step 2102, assistance information corresponding to data sample information is collected based on the second configuration information.

For example, in one embodiment of the present disclosure, the second configuration information refers to the configuration information sent by the core network device to the base station. The second configuration information is used to configure the base station to collect the assistance information corresponding to the data sample information. The second configuration information does not specifically refer to a fixed configuration information. The term "second" in the second configuration information is only used to distinguish it from other configuration information. For example, when the time point for collecting the assistance information changes, the second configuration information may also change accordingly. For example, when the specific information included in the assistance information corresponding to the data sample information changes, the second configuration information may also change accordingly.

In summary, in the embodiment of the present disclosure, the second configuration information sent by a core network device is received; the assistance information corresponding to data sample information is collected based on the second configuration information. In the embodiment of the present disclosure, a data processing mechanism can be provided, and the base station may collect the assistance information corresponding to the data sample information based on the second configuration information. A collection process for the assistance information corresponding to the data sample information can be provided, which reduces the situation where the data collection node cannot be determined, and the accuracy of the assistance information collection can be improved. The present disclosure provides a processing method for a "data processing" situation, so that the assistance information corresponding to the data sample information can be collected based on the second configuration information, and a collection process for the assistance information corresponding to the data sample information can be provided, thereby reducing the situation where the collection process for the assistance information corresponding to the data sample information cannot be determined, and improving the accuracy of the assistance information collection.

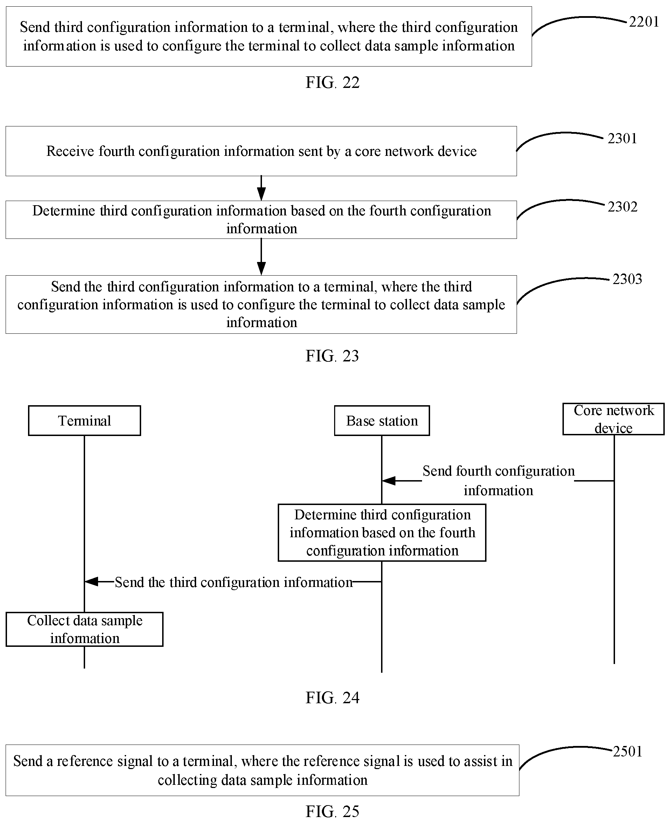

FIG. 22 is a schematic flow chart of a data processing method provided by an embodiment of the present disclosure. The method is executed by a base station. As shown in FIG. 22, the method may include the following step.

In step 2201, third configuration information is sent to a terminal, where the third configuration information is used to configure the terminal to collect data sample information.

For example, in one embodiment of the present disclosure, the third configuration information refers to information sent by the base station to the terminal that is used to configure the terminal to collect data sample information. The third configuration information may include, for example, configurations for collecting input-related information and label-related information of the data sample information. The third configuration information does not specifically refer to a fixed information. The term "third" in the third configuration information is only used to distinguish it from other configuration information. For example, when the AI model changes, the third configuration information may also change accordingly.

In summary, in the embodiment of the present disclosure, the third configuration information is sent to the terminal, where the third configuration information is used to configure the terminal to collect data sample information. In the embodiment of the present disclosure, a data processing mechanism can be provided to clarify that terminal collects data sample information. A collection process for data sample information can be provided to reduce the situation where the core network device cannot determine the data collection node, and the convenience of data processing can be improved. The present disclosure provides a processing method for a "data processing" situation, in which the terminal collects data sample information based on the third configuration information, and a collection process for data sample information can be provided, thereby reducing the situation where the collection process for data sample information cannot be determined, and improving the convenience of data processing.

FIG. 23 is a schematic flow chart of a data processing method provided by an embodiment of the present disclosure. The method is executed by a base station. As shown in FIG. 23, the method may include the following steps.

In step 2301, fourth configuration information sent by a core network device is received.

In step 2302, third configuration information is determined based on the fourth configuration information.

In step 2303, the third configuration information is sent to a terminal, where the third configuration information is used to configure the terminal to collect data sample information.

For example, in one embodiment of the present disclosure, the third configuration information is used to configure the terminal to collect data sample information. The third configuration information may include, for example, configurations for collecting input-related information and label-related information of the data sample information. The third configuration information does not specifically refer to a fixed information. The term "third" in the third configuration information is only used to distinguish it from other configuration information. For example, when the AI model changes, the third configuration information may also change accordingly.

For example, in one embodiment of the present disclosure, the fourth configuration information may be configuration information sent by the core network device to the base station. The fourth configuration information refers to the configuration information used by the base station to determine the first configuration information. The term "fourth" in the fourth configuration information is only used to distinguish it from other configuration information and does not specifically refer to a fixed configuration information.

Furthermore, in one embodiment of the present disclosure, FIG. 24 is a schematic interaction diagram of a data processing method provided by an embodiment of the present disclosure. As shown in FIG. 24, the base station may receive fourth configuration information sent by the core network device. The base station may determine third configuration information based on the fourth configuration information. When the base station determines the third configuration information, it may send the third configuration information to the terminal.

In summary, in the embodiment of the present disclosure, the fourth configuration information sent by a core network device is received; third configuration information is determined based on the fourth configuration information; and the third configuration information is sent to the terminal, where the third configuration information is used to configure the terminal to collect data sample information. In the embodiment of the present disclosure, a data processing mechanism can be provided to clarify that terminal collects data sample information. A collection process for data sample information can be provided to reduce the situation where the core network device cannot determine the data collection node, and the convenience of data processing can be improved. The embodiment of the present disclosure specifically discloses a scheme for determining the third configuration information based on the fourth configuration information. The present disclosure provides a processing method for a "data processing" situation, in which the terminal collects data sample information based on the third configuration information, and a collection process for data sample information can be provided, thereby reducing the situation where the collection process for data sample information cannot be determined, and improving the convenience of data processing.

FIG. 25 is a schematic flow chart of a data processing method provided by an embodiment of the present disclosure. The method is executed by a base station. As shown in FIG. 25, the method may include the following step.

In step 2501, a reference signal is sent to a terminal, where the reference signal is used to assist in collecting data sample information.

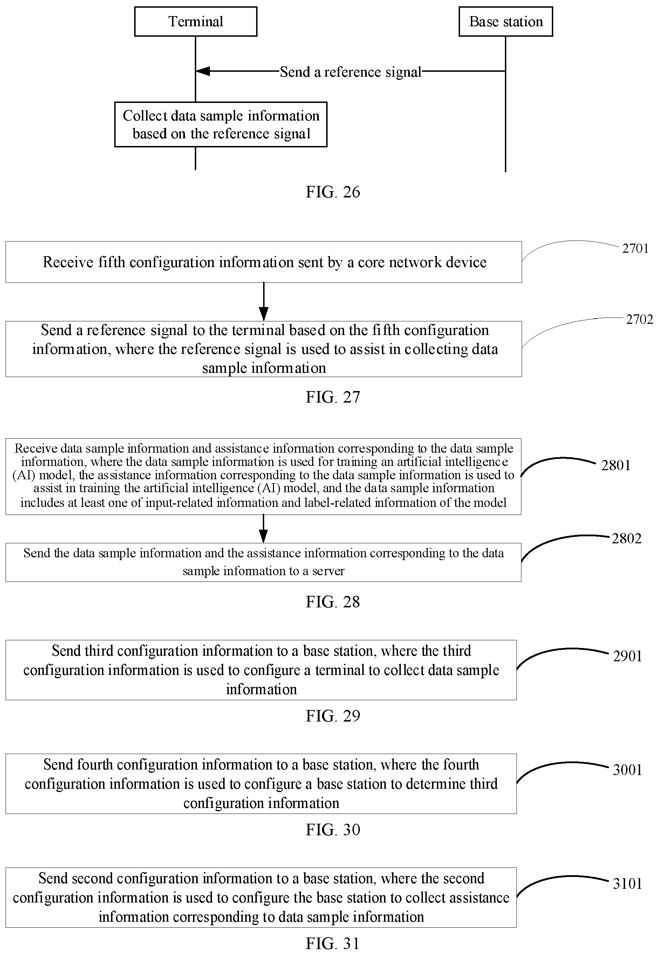

Furthermore, in one embodiment of the present disclosure, FIG. 26 is a schematic interaction diagram of a data processing method provided by an embodiment of the present disclosure. As shown in FIG. 25, the base station sends a reference signal to the terminal.

In summary, in the embodiment of the present disclosure, the reference signal is sent to the terminal, where the reference signal is used to assist in the collection of data sample information. In the embodiment of the present disclosure, a data processing mechanism may be provided so that the terminal collects data sample information according to the reference signal, and the accuracy of the data sample information collection can be improved. The present disclosure provides a processing method for a "data processing" scenario, in which a reference signal is sent to a terminal so that the terminal collects data sample information according to the reference signal, thereby improving the accuracy of the data sample information collection.

FIG. 27 is a schematic flow chart of a data processing method provided by an embodiment of the present disclosure. The method is executed by a base station. As shown in FIG. 27, the method may include the following steps.

In step 2701, fifth configuration information sent by a core network device is received.

In step 2702, a reference signal is sent to the terminal based on the fifth configuration information, where the reference signal is used to assist in collecting data sample information.

In one embodiment of the present disclosure, the fifth configuration information refers to information used to configure a reference signal. The term "fifth" in the fifth configuration information is only used to distinguish it from other configuration information, and does not specifically refer to a certain fixed configuration information.

In summary, in the embodiment of the present disclosure, the fifth configuration information sent by a core network device is received; a reference signal is sent to the terminal based on the fifth configuration information, where the reference signal is used to assist in the collection of data sample information. In the embodiment of the present disclosure, a data processing mechanism may be provided so that the terminal collects data sample information according to the reference signal, and the accuracy of the data sample information collection can be improved. The embodiment of the present disclosure specifically discloses a scheme for sending a reference signal to the terminal based on the fifth configuration information. The present disclosure provides a processing method for a "data processing" scenario, so as to send a reference signal to the terminal, so that the terminal collects data sample information according to the reference signal, thereby improving the accuracy of the data sample information collection.

FIG. 28 is a schematic flow chart of a data processing method provided by an embodiment of the present disclosure. The method is executed by a core network device. As shown in FIG. 28, the method may include the following steps.

In step 2801, data sample information and assistance information corresponding to the data sample information are received, where the data sample information is used for training an artificial intelligence (AI) model, the assistance information corresponding to the data sample information is used to assist in training the artificial intelligence (AI) model, and the data sample information includes at least one of input-related information and label-related information of the model.

In step 2802, the data sample information and the assistance information corresponding to the data sample information are sent to the server.

In one embodiment of the present disclosure, the technical solution of the embodiment of the present disclosure may be applied to the scenario where the server trains the AI model.

In an embodiment of the present disclosure, the method further includes:
sending third configuration information to a base station, where the third configuration information is used to configure a terminal to collect the data sample information.

Furthermore, in an embodiment of the present disclosure, the method further includes:
sending fourth configuration information to the base station, where the fourth configuration information is used to configure the base station to determine the third configuration information.

In an embodiment of the present disclosure, the method further includes:
sending second configuration information to a base station, where the second configuration information is used to configure the base station to collect the assistance information corresponding to the data sample information.

For example, in an embodiment of the present disclosure, the method further includes:
sending fifth configuration information to a base station, where the fifth configuration information is used to configure the base station to send a reference signal to a terminal.

In an embodiment of the present disclosure, receiving the data sample information and the assistance information corresponding to the data sample information includes:
receiving the data sample information and the assistance information corresponding to the data sample information sent by a terminal.

For example, in one embodiment of the present disclosure, the terminal may send the data sample information and the assistance information corresponding to the data sample information to the base station. The base station may send the data sample information and the assistance information corresponding to the data sample information to the core network device.

Furthermore, in an embodiment of the present disclosure, receiving the data sample information and the assistance information corresponding to the data sample information includes:
receiving the data sample information and the assistance information corresponding to the data sample information sent by a base station.

In an embodiment of the present disclosure, receiving the data sample information and the assistance information corresponding to the data sample information includes:
receiving the data sample information sent by a base station; and
receiving the assistance information corresponding to the data sample information sent by the base station.

Furthermore, in one embodiment of the present disclosure, the data sample information sent by the base station may be data sample information sent by the terminal to the base station, that is, the base station may receive the data sample information sent by the terminal, and send the data sample information to the core network device.

For example, in an embodiment of the present disclosure, the method further includes:
performing mapping on the data sample information and the assistance information corresponding to the data sample information to obtain mapped data sample information and assistance information corresponding to the data sample information;
where sending the data sample information and the assistance information corresponding to the data sample information to the server includes:
   sending the mapped data sample information and assistance information corresponding to the data sample information to the server.

Furthermore, in one embodiment of the present disclosure, when the core network device respectively receives data sample information sent by the terminal and the assistance information corresponding to the data sample information sent by the base station, the data sample information and the assistance information corresponding to the data sample information can be mapped to obtain the mapped data sample information and assistance information corresponding to the data sample information.

In summary, in the embodiments of the present disclosure, the data sample information and the assistance information corresponding to the data sample information are received, where the data sample information is used for training an artificial intelligence (AI) model, the assistance information corresponding to the data sample information is used to assist in the training of the artificial intelligence (AI) model, and the data sample information includes at least one of the input-related information and label-related information of the model; and the data sample information and the assistance information corresponding to the data sample information are sent to the server. In the embodiments of the present disclosure, a data processing mechanism can be provided to clarify that the core network device receives the data sample information and the assistance information corresponding to the data sample information, and sends the data sample information and the assistance information corresponding to the data sample information to the server. A collection process for the data sample information and the assistance information corresponding to the data sample information is provided, and the convenience of data processing is improved. The present disclosure provides a processing method for a " data processing " situation, so as to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby reducing the situation where the data collection process cannot be determined, and improving the convenience of data processing.

FIG. 29 is a schematic flow chart of a data processing method provided by an embodiment of the present disclosure. The method is executed by a core network device. As shown in FIG. 29, the method may include the following steps.

In step 2901, third configuration information is sent to a base station, where the third configuration information is used to configure a terminal to collect data sample information.

In summary, in the embodiment of the present disclosure, the third configuration information is sent to the base station, where the third configuration information is used to configure the terminal to collect data sample information. In the embodiment of the present disclosure, a data processing mechanism can be provided, and the third configuration information may be sent to the base station. A collection process for data sample information is provided, thereby improving the convenience of data processing. The present disclosure provides a processing method for a "data processing" situation, so as to clarify that the terminal collects data sample information. A collection process for data sample information is provided, thereby reducing the situation where the data collection process cannot be determined, and improving the convenience of data processing.

FIG. 30 is a schematic flow chart of a data processing method provided by an embodiment of the present disclosure. The method is executed by a core network device. As shown in FIG. 30, the method may include the following steps.

In step 3001, fourth configuration information is sent to a base station, where the fourth configuration information is used to configure a base station to determine third configuration information.

In summary, in the embodiment of the present disclosure, the fourth configuration information is sent to the base station, where the fourth configuration information is used to configure the base station to determine the third configuration information. In the embodiment of the present disclosure, a data processing mechanism can be provided, and the fourth configuration information may be sent to the base station so that the base station determines the third configuration information. A collection process for data sample information is provided, thereby improving the convenience of data processing. The present disclosure provides a processing method for a "data processing" situation, so as to clarify that the terminal collects data sample information. A collection process for data sample information is provided, thereby reducing the situation where the data collection process cannot be determined, and improving the convenience of data processing.

FIG. 31 is a schematic flow chart of a data processing method provided by an embodiment of the present disclosure. The method is executed by a core network device. As shown in FIG. 31, the method may include the following step.

In step 3101, second configuration information is sent to a base station, where the second configuration information is used to configure the base station to collect assistance information corresponding to data sample information.

In summary, in the embodiment of the present disclosure, the second configuration information is sent to the base station, where the second configuration information is used to configure the base station to collect assistance information corresponding to the data sample information. A collection process for the assistance information corresponding to the data sample information is provided, thereby improving the convenience of data processing. The present disclosure provides a processing method for a "data processing" situation, so as to clarify that the base station collects the assistance information corresponding to the data sample information. A collection process for the assistance information corresponding to the data sample information is provided, thereby reducing the situation where the data collection process cannot be determined, and improving the convenience of data processing.

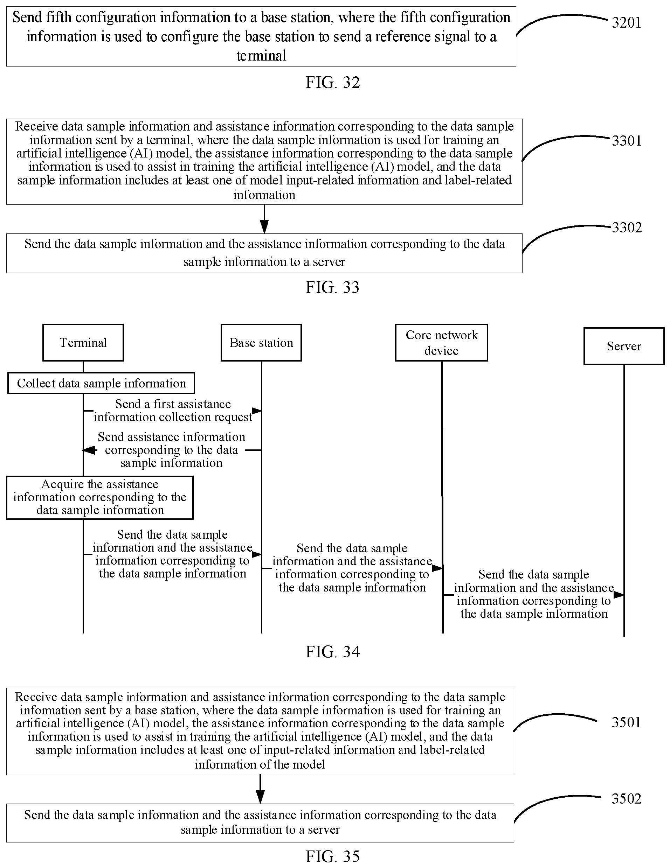

FIG. 32 is a schematic flow chart of a data processing method provided by an embodiment of the present disclosure. The method is executed by a core network device. As shown in FIG. 32, the method may include the following step.

In step 3201, fifth configuration information is sent to a base station, where the fifth configuration information is used to configure the base station to send a reference signal to a terminal.

In summary, in the embodiment of the present disclosure, the fifth configuration information is sent to the base station, where the fifth configuration information is used to configure the base station to send a reference signal to the terminal. In the embodiment of the present disclosure, a data processing mechanism can be provided, and the fifth configuration information may be sent to the base station, so that the base station sends a reference signal to the terminal. A collection process for data sample information is provided, thereby improving the convenience of data processing. The present disclosure provides a processing method for a "data processing" situation to clarify that the terminal collects data sample information, and the reference signal is used to assist in the collection of data sample information. A collection process for data sample information is provided, thereby reducing the situation where the data collection process cannot be determined, and improving the convenience of data processing.

FIG. 33 is a schematic flow chart of a data processing method provided by an embodiment of the present disclosure. The method is executed by a core network device. As shown in FIG. 33, the method may include the following steps.

In step 3301, data sample information and assistance information corresponding to the data sample information sent by a terminal is received, where the data sample information is used for training an artificial intelligence (AI) model, the assistance information corresponding to the data sample information is used to assist in training the artificial intelligence (AI) model, and the data sample information includes at least one of model input-related information and label-related information.

In step 3302, the data sample information and the assistance information corresponding to the data sample information are sent to the server.

Furthermore, in one embodiment of the present disclosure, FIG. 34 is a schematic interaction diagram of a data processing method provided by an embodiment of the present disclosure. As shown in FIG. 34, the terminal may collect data sample information. The terminal may send a first assistance information collection request to the base station, and the base station may send the assistance information corresponding to the data sample information to the terminal in response to the first assistance information collection request. The terminal may receive the assistance information corresponding to the data sample information. The terminal may send the data sample information and the assistance information corresponding to the data sample information to the core network device. The core network device may send the data sample information and the assistance information corresponding to the data sample information to the server.

In summary, in the embodiment of the present disclosure, the data sample information and the assistance information corresponding to the data sample information sent by the terminal are received, where the data sample information is used for training an artificial intelligence (AI) model, the assistance information corresponding to the data sample information is used to assist in the training of the artificial intelligence (AI) model, and the data sample information includes at least one of input-related information and label-related information of the model; and the data sample information and the assistance information corresponding to the data sample information are sent to the server. In the embodiment of the present disclosure, a data processing mechanism can be provided to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby improving the convenience of data processing. The embodiment of the present disclosure specifically discloses a scheme for receiving the data sample information and the assistance information corresponding to the data sample information sent by the terminal. The present disclosure provides a processing method for a "data processing" situation, so as to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby reducing the situation where the data collection process cannot be determined, and improving the convenience of data processing.

FIG. 35 is a schematic flow chart of a data processing method provided by an embodiment of the present disclosure. The method is executed by a core network device. As shown in FIG. 35, the method may include the following steps.

In step 3501, data sample information and assistance information corresponding to the data sample information sent by a base station is received, where the data sample information is used for training an artificial intelligence (AI) model, the assistance information corresponding to the data sample information is used to assist in training the artificial intelligence (AI) model, and the data sample information includes at least one of input-related information and label-related information of the model.

In step 3502, the data sample information and the assistance information corresponding to the data sample information are sent to the server.

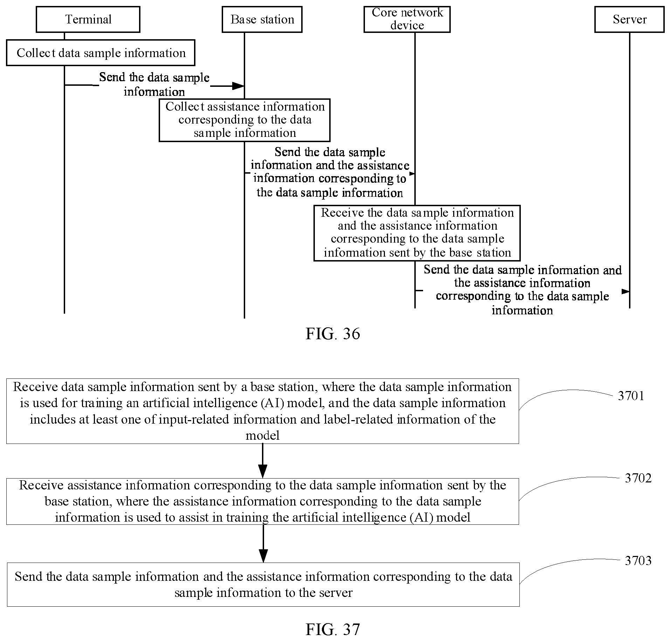

Furthermore, in one embodiment of the present disclosure, FIG. 36 is a schematic interaction diagram of a data processing method provided by an embodiment of the present disclosure. As shown in FIG. 36, the terminal may collect data sample information. The terminal may send the data sample information to the base station, and the base station may receive the data sample information sent by the terminal. The base station may send the data sample information and the assistance information corresponding to the data sample information to the core network device. The core network device may send the data sample information and the assistance information corresponding to the data sample information to the server.

In summary, in the embodiment of the present disclosure, the data sample information and assistance information corresponding to the data sample information sent by the base station are received, where the data sample information is used for training an artificial intelligence (AI) model, the assistance information corresponding to the data sample information is used to assist in the training of the artificial intelligence (AI) model, and the data sample information includes at least one of input-related information and label-related information of the model, and the data sample information and the assistance information corresponding to the data sample information are sent to the server. In the embodiment of the present disclosure, a data processing mechanism can be provided to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby improving the convenience of data processing. The embodiment of the present disclosure specifically discloses a scheme for receiving the data sample information and the assistance information corresponding to the data sample information sent by the base station. The present disclosure provides a processing method for a "data processing" situation to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby reducing the situation where the data collection process cannot be determined, and improving the convenience of data processing.

FIG. 37 is a schematic flow chart of a data processing method provided by an embodiment of the present disclosure. The method is executed by a core network device. As shown in FIG. 37, the method may include the following steps.

In step 3701, data sample information sent by a base station is received, where the data sample information is used for training an artificial intelligence (AI) model, and the data sample information includes at least one of input-related information and label-related information of the model.

In step 3702, assistance information corresponding to the data sample information sent by the base station is received, where the assistance information corresponding to the data sample information is used to assist in training the artificial intelligence (AI) model.

In step 3703, the data sample information and the assistance information corresponding to the data sample information are sent to the server.

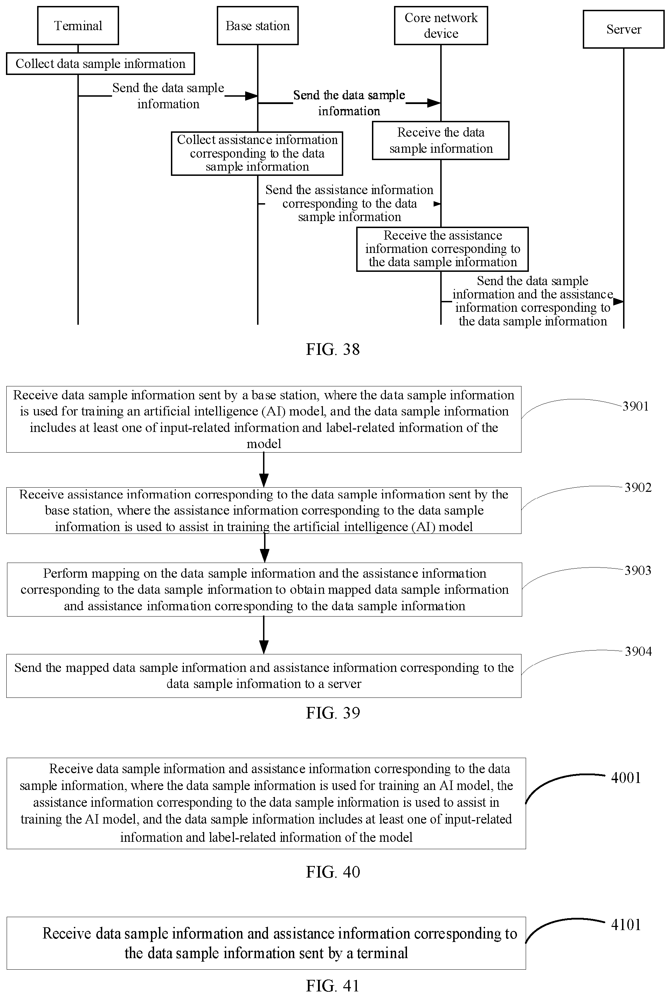

Furthermore, in one embodiment of the present disclosure, FIG. 38 is a schematic interaction diagram of a data processing method provided by an embodiment of the present disclosure. As shown in FIG. 38, the core network device may receive data sample information sent by the base station, where the data sample information is used for training an artificial intelligence (AI) model, and the data sample information includes at least one of input-related information and label-related information of the model. The data sample information sent by the base station may be, for example, data sample information sent by a terminal to the base station. That is, the base station may receive the data sample information sent by the terminal, and send the data sample information to the core network device. The core network device may receive the assistance information corresponding to the data sample information sent by the base station, where the assistance information corresponding to the data sample information is used to assist in the training of the artificial intelligence (AI) model. That is, the data sample information and the assistance information corresponding to the data sample information received by the core network device come from different devices respectively. The core network device may send the data sample information and the assistance information corresponding to the data sample information to the server.

There is no limitation on the execution order of the step 3701 and the step 3702.

In summary, in the embodiment of the present disclosure, the data sample information sent by a base station is received, where the data sample information is used for training an artificial intelligence (AI) model, and the data sample information includes at least one of input-related information and label-related information of the model; assistance information corresponding to the data sample information sent by the base station is received, where the assistance information corresponding to the data sample information is used to assist the training of the artificial intelligence (AI) model; and the data sample information and the assistance information corresponding to the data sample information are sent to the server. In the embodiment of the present disclosure, a data processing mechanism can be provided to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby improving the convenience of data processing. The embodiment of the present disclosure specifically discloses a scheme for receiving the data sample information sent by the base station and the assistance information corresponding to the data sample information sent by the base station. The present disclosure provides a processing method for a " data processing " situation, so as to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby reducing the situation where the data collection process cannot be determined, and improving the convenience of data processing.

FIG. 39 is a schematic flow chart of a data processing method provided by an embodiment of the present disclosure. The method is executed by a core network device. As shown in FIG. 39, the method may include the following steps.

In step 3901, data sample information sent by a base station is received, where the data sample information is used for training an artificial intelligence (AI) model, and the data sample information includes at least one of input-related information and label-related information of the model.

In step 3902, assistance information corresponding to the data sample information sent by the base station is received, where the assistance information corresponding to the data sample information is used to assist in training the artificial intelligence (AI) model.

In step 3903, the data sample information and the assistance information corresponding to the data sample information are mapped to obtain the mapped data sample information and assistance information corresponding to the data sample information.

In step 3904, the mapped data sample information and assistance information corresponding to the data sample information are sent to the server.

In summary, in the embodiment of the present disclosure, the data sample information sent by a base station is received, where the data sample information is used for training an artificial intelligence (AI) model, and the data sample information includes at least one of input-related information and label-related information of the model; assistance information corresponding to the data sample information sent by the base station is received, where the assistance information corresponding to the data sample information is used to assist the training of the artificial intelligence (AI) model; and the data sample information and the assistance information corresponding to the data sample information are mapped to obtain the mapped data sample information and assistance information corresponding to the data sample information, and the mapped data sample information and assistance information corresponding to the data sample information are sent to the server. In the embodiment of the present disclosure, a data processing mechanism can be provided to clarify that the core network device receives the data sample information and the assistance information corresponding to the data sample information, and then sends the mapped data sample information and assistance information corresponding to the data sample information to the server. A collection process for the data sample information and the assistance information corresponding to the data sample information is provided, thereby improving the convenience of data processing. The embodiment of the present disclosure specifically discloses a scheme for performing mapping on data sample information and the assistance information corresponding to the data sample information. The present disclosure provides a processing method for a "data processing" situation, so as to clarify that a core network device receives data sample information and assistance information corresponding to the data sample information, and then sends the mapped data sample information and assistance information corresponding to the data sample information to a server. A collection process for the data sample information and the assistance information corresponding to the data sample information is provided, thereby reducing the situation where the data collection process cannot be determined and improving the convenience of data processing.

FIG. 40 is a schematic flow chart of a data processing method provided by an embodiment of the present disclosure. The method is executed by a server. As shown in FIG. 40, the method may include the following step.

In step 4001, data sample information and assistance information corresponding to the data sample information are received, where the data sample information is used for training an AI model, the assistance information corresponding to the data sample information is used to assist in training the AI model, and the data sample information includes at least one of input-related information and label-related information of the model.

In an embodiment of the present disclosure, the technical solution of the embodiment of the present disclosure may be applied to the scenario where the server trains the AI model.

Furthermore, in an embodiment of the present disclosure, the method further includes:

sending first configuration information to the terminal, where the first configuration information is used to configure the terminal to collect the data sample information.

In an embodiment of the present disclosure, receiving the data sample information and the assistance information corresponding to the data sample information includes:
receiving the data sample information sent by a terminal; and
receiving the assistance information corresponding to the data sample information sent by a base station.

Furthermore, in one embodiment of the present disclosure, when the server receives the data sample information sent by the terminal and the assistance information corresponding to the data sample information sent by the base station, the data sample information and the assistance information corresponding to the data sample information can be mapped to obtain the mapped data sample information and assistance information corresponding to the data sample information.

Furthermore, in an embodiment of the present disclosure, receiving the assistance information corresponding to the data sample information sent by the base station includes:
sending a second assistance information collection request to the base station; and
receiving the assistance information corresponding to the data sample information sent by the base station in response to the second assistance information collection request.

In an embodiment of the present disclosure, receiving the data sample information and the assistance information corresponding to the data sample information includes:
receiving the data sample information and the assistance information corresponding to the data sample information sent by a core network device.

For example, in an embodiment of the present disclosure, receiving the data sample information and the assistance information corresponding to the data sample information includes:
sending information request to the core network device; and
receiving the data sample information and the assistance information corresponding to the data sample information sent by the core network device in response to the information request.

In one embodiment of the present disclosure, the data sample information and the assistance information corresponding to the data sample information received by the core network device may be implemented as follows. The terminal sends the encapsulated data sample information and assistance information corresponding to the data sample information to the base station, and the base station forwards the encapsulated data sample information and assistance information corresponding to the data sample information to the core network device.

In one embodiment of the present disclosure, the data sample information and the assistance information corresponding to the data sample information received by the core network device may be implemented as follows. The base station receives the data sample information sent by the terminal, the base station encapsulates the data sample information and the assistance information corresponding to the data sample information, and sends the encapsulated data sample information and assistance information corresponding to the data sample information to the core network device.

In one embodiment of the present disclosure, the data sample information and the assistance information corresponding to the data sample information received by the core network device may be implemented as follows. The data sample information sent by the base station is received, and the assistance information corresponding to the data sample information sent by the base station is received. The data sample information sent by the base station may be, for example, data sample information sent by the terminal to the base station. That is, the base station may receive the data sample information sent by the terminal, and send the data sample information to the core network device.

In one embodiment of the present disclosure, when the core network device receives data sample information and assistance information corresponding to the data sample information, it may perform mapping on the data sample information and the assistance information corresponding to the data sample information to obtain the mapped data sample information and assistance information corresponding to the data sample information, and then send the mapped data sample information and assistance information corresponding to the data sample information to the server.

In summary, in the embodiments of the present disclosure, the data sample information and the assistance information corresponding to the data sample information are received, where the data sample information is used for training an artificial intelligence (AI) model, the assistance information corresponding to the data sample information is used to assist in the training of the artificial intelligence (AI) model, and the data sample information includes at least one of the input-related information and label-related information of the model. In the embodiments of the present disclosure, a data processing mechanism can be provided to clarify that the server receives the data sample information and the assistance information corresponding to the data sample information. A collection process for the data sample information and the assistance information corresponding to the data sample information is provided, thereby improving the convenience of data processing. The present disclosure provides a processing method for a "data processing" scenario, so as to clarify that the server receives the data sample information and the assistance information corresponding to the data sample information. A collection process for the data sample information and the assistance information corresponding to the data sample information is provided, thereby reducing the situation where the data collection process cannot be determined, and improving the convenience of data processing.

FIG. 41 is a schematic flow chart of a data processing method provided by an embodiment of the present disclosure. The method is executed by a server. As shown in FIG. 41, the method may include the following step.

In step 4101, data sample information and assistance information corresponding to the data sample information sent by a terminal is received.

The data sample information is used for training an AI model, and the assistance information corresponding to the data sample information is used to assist the training of the AI model. The data sample information includes at least one of the input-related information and label-related information of the model.

In summary, in the embodiment of the present disclosure, the data sample information and the assistance information corresponding to the data sample information sent by a terminal is received. In the embodiment of the present disclosure, a data processing mechanism can be provided to clarify that a server receives the data sample information and the assistance information corresponding to the data sample information. A collection process for the data sample information and the assistance information corresponding to the data sample information is provided, thereby improving the convenience of data processing. The present disclosure specifically discloses a scheme in which the data sample information and the assistance information corresponding to the data sample information sent by a terminal are received. The present disclosure provides a processing method for a "data processing" scenario to clarify that a server receives the data sample information and the assistance information corresponding to the data sample information. A collection process for the data sample information and the assistance information corresponding to the data sample information is provided, thereby reducing the situation in which the data collection process cannot be determined, and improving the convenience of data processing.

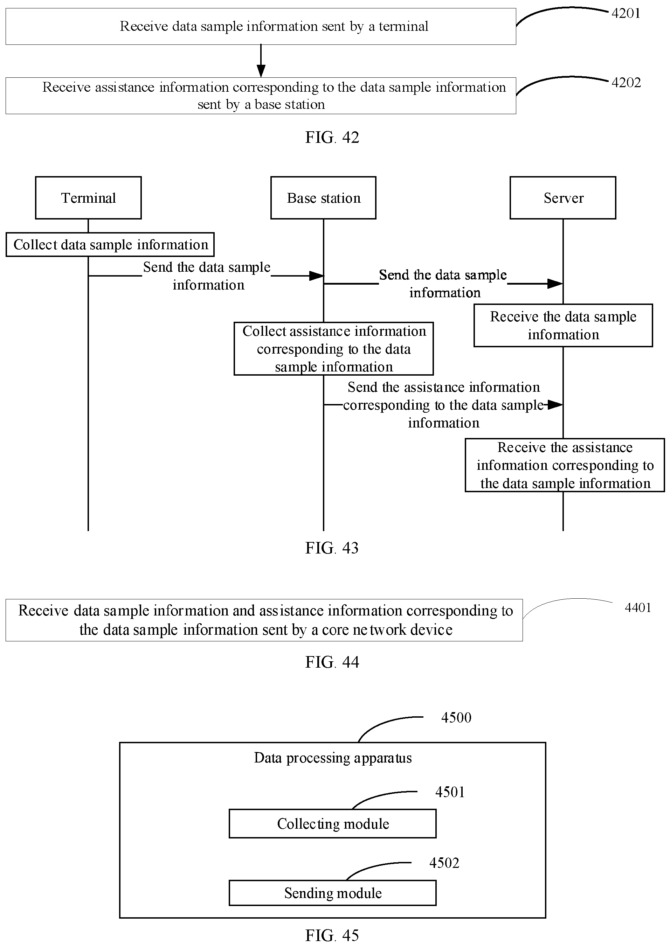

FIG. 42 is a schematic flow chart of a data processing method provided by an embodiment of the present disclosure. The method is executed by a server. As shown in FIG. 42, the method may include the following steps.

In step 4201, data sample information sent by a terminal is received.

In step 4202, assistance information corresponding to the data sample information sent by a base station is received.

The data sample information is used for training the AI model, and the assistance information corresponding to the data sample information is used to assist the training of the AI model. The data sample information includes at least one of the input-related information and label-related information of the model.

Furthermore, in one embodiment of the present disclosure, FIG. 43 is a schematic interaction diagram of a data processing method provided by an embodiment of the present disclosure. As shown in FIG. 43, the server may receive data sample information sent by the terminal, where the data sample information is used for training an artificial intelligence (AI) model, and the data sample information includes at least one of input-related information and label-related information of the model; the server may receive assistance information corresponding to the data sample information sent by the base station, where the assistance information corresponding to the data sample information is used to assist in the training of the artificial intelligence (AI) model. That is, the data sample information and the assistance information corresponding to the data sample information received by the server come from different devices respectively.

Furthermore, in one embodiment of the present disclosure, in the case that the server receives assistance information corresponding to the data sample information sent by the base station, it may send a second assistance information collection request to the base station, and receive the assistance information corresponding to the data sample information sent by the base station in response to the second assistance information collection request.

In summary, in the embodiment of the present disclosure, data the sample information sent by the terminal is received; and the assistance information corresponding to the data sample information sent by the base station is received. In the embodiment of the present disclosure, a data processing mechanism can be provided to clarify that a server receives data sample information and assistance information corresponding to the data sample information. A collection process for the data sample information and the assistance information corresponding to the data sample information is provided, thereby improving the convenience of data processing. The present disclosure specifically discloses a scheme for receiving data sample information sent by a terminal and receiving assistance information corresponding to the data sample information sent by a base station. The present disclosure provides a processing method for a "data processing" scenario, so as to clarify that a server receives data sample information and assistance information corresponding to the data sample information. A collection process for the data sample information and the assistance information corresponding to the data sample information is provided, thereby reducing the situation where the data collection process cannot be determined, and improving the convenience of data processing.

FIG. 44 is a schematic flow chart of a data processing method provided by an embodiment of the present disclosure. The method is executed by a server. As shown in FIG. 44, the method may include the following step.

In step 4401, data sample information and assistance information corresponding to the data sample information sent by a core network device are received.

Furthermore, in an embodiment of the present disclosure, receiving, by the server, the data sample information and the assistance information corresponding to the data sample information from the core network device includes:
sending information request to the core network device; and
receiving the data sample information and the assistance information corresponding to the data sample information sent by the core network device in response to the information request.

In one embodiment of the present disclosure, the data sample information and the assistance information corresponding to the data sample information received by the core network device may be implemented as follows. The terminal sends the encapsulated data sample information and assistance information corresponding to the data sample information to the base station, and the base station forwards the encapsulated data sample information and assistance information corresponding to the data sample information to the core network device.

In one embodiment of the present disclosure, the data sample information and the assistance information corresponding to the data sample information received by the core network device may be implemented as follows. The base station receives the data sample information sent by the terminal, the base station encapsulates the data sample information and the assistance information corresponding to the data sample information, and sends the encapsulated data sample information and assistance information corresponding to the data sample information to the core network device.

In one embodiment of the present disclosure, the data sample information and the assistance information corresponding to the data sample information received by the core network device may be implemented as follows. The data sample information sent by the base station is received, and the assistance information corresponding to the data sample information sent by the base station is received. The data sample information sent by the base station may be, for example, data sample information sent by the terminal to the base station. That is, the base station may receive the data sample information sent by the terminal, and send the data sample information to the core network device.

In summary, in the embodiment of the present disclosure, the data sample information and the assistance information corresponding to the data sample information sent by the core network device are received. In the embodiment of the present disclosure, a data processing mechanism can be provided to clarify that the server receives data sample information and assistance information corresponding to the data sample information. A collection process for the data sample information and the assistance information corresponding to the data sample information is provided, thereby improving the convenience of data processing. The present disclosure specifically discloses a scheme for receiving data sample information and assistance information corresponding to the data sample information sent by the core network device. The present disclosure provides a processing method for a "data processing" scenario to clarify that the server receives the data sample information and the assistance information corresponding to the data sample information. A collection process for the data sample information and the assistance information corresponding to the data sample information is provided, thereby reducing the situation where the data collection process cannot be determined, and improving the convenience of data processing.

FIG. 45 is a schematic diagram of the structure of a data processing apparatus provided by an embodiment of the present disclosure. As shown in FIG. 45, the apparatus 4500 may be arranged on a terminal side, and the apparatus 4500 may include:
a collecting module 4501, configured to collect data sample information, where the data sample information includes at least one of input-related information and label-related information of an AI model, and the data sample information is used for training the AI model; and
a sending module 4502, configured to send the data sample information to a server.

In summary, in the embodiment of the present disclosure, the collection module is configured to collect data sample information, where the data sample information includes at least one of input-related information and label-related information of the AI model, and the data sample information is used for training the AI model; the sending module is used to send the data sample information to the server. In the embodiment of the present disclosure, a data processing mechanism can be provided, and when the terminal collects the data sample information, it may send the data sample information to the server. A collection process for the data sample information can be provided, which reduces the situation where the data collection node cannot be determined, and the convenience of data processing can be improved. The present disclosure provides a processing method for a "data processing" situation, so that when the data sample information is collected, the data sample information can be sent to the server, thereby reducing the situation where the data sample information collection process cannot be determined, and improving the convenience of data processing.

Optionally, in an embodiment of the present disclosure, the collecting module 4501 is further configured to:
acquire assistance information corresponding to the data sample information, where the assistance information corresponding to the data sample information is used to assist in training the AI model.

Optionally, in an embodiment of the present disclosure, the collecting module 4501, when configured to acquire the assistance information corresponding to the data sample information, is specifically configured to:
send a first assistance information collection request to a base station; and
receive the assistance information corresponding to the data sample information sent by the base station in response to the first assistance information collection request.

Optionally, in an embodiment of the present disclosure, the sending module 4502 is further configured to:
send the data sample information and the assistance information corresponding to the data sample information to the server.

Optionally, in an embodiment of the present disclosure, the sending module 4502 is further configured to:
send the data sample information and the assistance information corresponding to the data sample information to a base station.

Optionally, in an embodiment of the present disclosure, the collecting module 4501 is further configured to:
receive first configuration information sent by the server; and
collect the data sample information based on the first configuration information.

Optionally, in an embodiment of the present disclosure, the collecting module 4501 is further configured to:
measure a reference signal; and
collect the data sample information based on a measurement result of the reference signal.

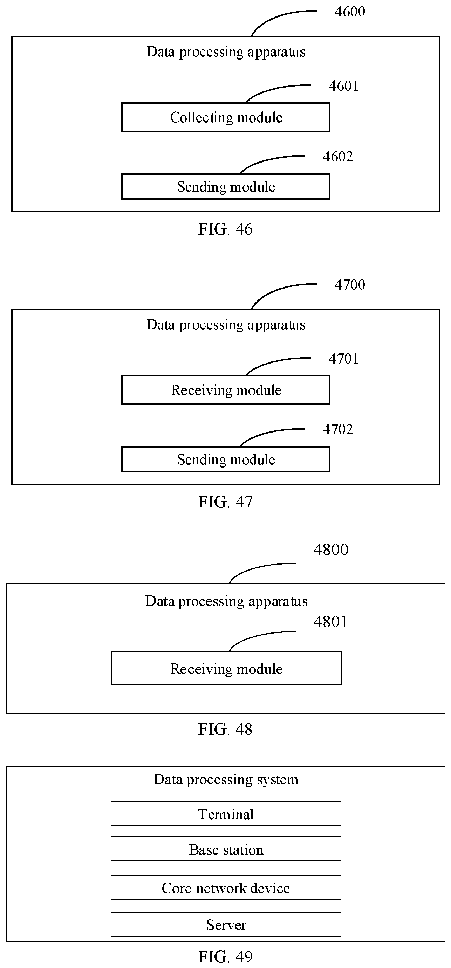

FIG. 46 is a schematic diagram of the structure of a data processing apparatus provided by an embodiment of the present disclosure. As shown in FIG. 46, the apparatus 4600 may be arranged on a base station side, and the apparatus 4600 may include:
a collecting module 4601, configured to collect assistance information corresponding to data sample information, where the assistance information corresponding to the data sample information is used to assist in training the AI model; and
a sending module 4602, configured to perform at least one of following operations:
   sending the assistance information corresponding to the data sample information to a server;
   sending the assistance information corresponding to the data sample information to a terminal; and
   sending the assistance information corresponding to the data sample information to a core network device.

In summary, in the embodiment of the present disclosure, the collecting module is configured to collect assistance information corresponding to the data sample information, where the assistance information corresponding to the data sample information is used to assist the training of the AI model. The sending module is configured to perform at least one of the following operations: sending the assistance information corresponding to the data sample information to the server; sending the assistance information corresponding to the data sample information to the terminal; and sending the assistance information corresponding to the data sample information to the core network device. In the embodiment of the present disclosure, a data processing mechanism can be provided to clarify that the base station collects the assistance information corresponding to the data sample information. A collection process for the assistance information corresponding to the data sample information can be provided, which reduces the situation where the data collection node cannot be determined, and the convenience of data processing can be improved. The present disclosure provides a processing method for a "data processing" situation to clarify that the base station collects the assistance information corresponding to the data sample information. A collection process for the assistance information corresponding to the data sample information can be provided, thereby reducing the situation where the assistance information collection process corresponding to the data sample information cannot be determined, and improving the convenience of data processing.

Optionally, in an embodiment of the present disclosure, the sending module 4602 is further configured to:
receive a first assistance information collection request sent by the terminal; and
send, in response to the first assistance information collection request, the assistance information corresponding to the data sample information to the terminal.

Optionally, in an embodiment of the present disclosure, the acquisition module 4601, when configured to send the assistance information corresponding to the data sample information to the server, is specifically configured to:
receive a second assistance information collection request sent by the server; and
send, in response to the second assistance information collection request, the assistance information corresponding to the data sample information is sent to the server.

Optionally, in an embodiment of the present disclosure, the collecting module 4601 is further configured to:
receive second configuration information sent by the core network device; and
collect the assistance information corresponding to the data sample information based on the second configuration information.

Optionally, in an embodiment of the present disclosure, the acquisition module 4601 is further configured to:
receive the data sample information sent by the terminal, where the data sample information includes at least one of input-related information and label-related information of the AI model, and the data sample information is used for training the AI model; and
send the data sample information and the assistance information corresponding to the data sample information to the core network device.

Optionally, in an embodiment of the present disclosure, the collecting module 4601 is further configured to:
send third configuration information to the terminal, where the third configuration information is used to configure the terminal to collect the data sample information.

Optionally, in an embodiment of the present disclosure, the collecting module 4601 is further configured to:
receive fourth configuration information sent by the core network device; and
determine the third configuration information based on the fourth configuration information.

Optionally, in an embodiment of the present disclosure, the acquisition module 4601 is further configured to:
send a reference signal to a terminal, where the reference signal is used to assist in collecting the data sample information.

Optionally, in an embodiment of the present disclosure, the collecting module 4601, when configured to send the reference signal to the terminal, is specifically configured to:
receive fifth configuration information sent by the core network device; and
send the reference signal to the terminal based on the fifth configuration information.

FIG. 47 is a schematic diagram of the structure of a data processing apparatus provided in an embodiment of the present disclosure. As shown in FIG. 47, the apparatus 4700 may be arranged on a core network device side, and the apparatus 4700 may include:
a receiving module 4701, configured to receive data sample information and assistance information corresponding to the data sample information, where the data sample information is used for training an AI model, the assistance information corresponding to the data sample information is used to assist in training the AI model, and the data sample information includes at least one of input-related information and label-related information of the model; and
a sending module 4702, configured to send the data sample information and the assistance information corresponding to the data sample information to a server.

In summary, in the embodiment of the present disclosure, the receiving module is configured to receive data sample information and assistance information corresponding to the data sample information, where the data sample information is used for training the AI model, the assistance information corresponding to the data sample information is used to assist the training of the AI model, and the data sample information includes at least one of input-related information and label-related information of the model. The sending module is configured to send the data sample information and the assistance information corresponding to the data sample information to the server. In the embodiment of the present disclosure, a data processing mechanism can be provided to clarify that the core network device receives the data sample information and the assistance information corresponding to the data sample information, and sends the data sample information and the assistance information corresponding to the data sample information to the server. A collection process for the data sample information and the assistance information corresponding to the data sample information is provided to improve the convenience of data processing. The present disclosure provides a processing method for a "data processing" situation, so as to clarify that the core network device receives the data sample information and the assistance information corresponding to the data sample information, and then sends the data sample information and the assistance information corresponding to the data sample information to the server. A collection process for the data sample information and the assistance information corresponding to the data sample information is provided, thereby reducing the situation where the data collection process cannot be determined, and improving the convenience of data processing.

Optionally, in an embodiment of the present disclosure, the sending module 4702 is further configured to:
send third configuration information to a base station, where the third configuration information is used to configure a terminal to collect the data sample information.

Optionally, in an embodiment of the present disclosure, the sending module 4702 is further configured to:
send fourth configuration information to the base station, where the fourth configuration information is used to configure the base station to determine the third configuration information.

Optionally, in an embodiment of the present disclosure, the sending module 4702 is further configured to:
send second configuration information to a base station, where the second configuration information is used to configure the base station to collect the assistance information corresponding to the data sample information.

Optionally, in an embodiment of the present disclosure, the sending module 4702 is further configured to:
send fifth configuration information to a base station, where the fifth configuration information is used to configure the base station to send a reference signal to a terminal.

Optionally, in an embodiment of the present disclosure, the receiving module 4701, when configured to receive the data sample information and the assistance information corresponding to the data sample information, is specifically configured to:
receive the data sample information and the assistance information corresponding to the data sample information sent by a terminal.

Optionally, in an embodiment of the present disclosure, the receiving module 4701, when configured to receive the data sample information and the assistance information corresponding to the data sample information, is specifically configured to:
receive the data sample information and the assistance information corresponding to the data sample information sent by a base station.

Optionally, in an embodiment of the present disclosure, the receiving module 4701, when configured to receive the data sample information and the assistance information corresponding to the data sample information, is specifically configured to:
receive the data sample information sent by a base station; and
receive the assistance information corresponding to the data sample information sent by the base station.

Optionally, in an embodiment of the present disclosure, the sending module 4702 is further configured to:
perform mapping on the data sample information and the assistance information corresponding to the data sample information to obtain mapped data sample information and assistance information corresponding to the data sample information;
where sending the data sample information and the assistance information corresponding to the data sample information to the server includes:
   sending the mapped data sample information and assistance information corresponding to the data sample information to the server.

Optionally, in an embodiment of the present disclosure, the sending module 4702, when configured to send the data sample information and the assistance information corresponding to the data sample information to the server, is specifically configured to:
receive an information request sent by the server; and
send, in response to the information request, the data sample information and the assistance information corresponding to the data sample information to the server.

FIG. 48 is a schematic diagram of the structure of a data processing apparatus provided by an embodiment of the present disclosure. As shown in FIG. 48, the apparatus 4800 may be arranged on the server side, and the apparatus 4800 may include:
a receiving module 4801, configured to receive data sample information and assistance information corresponding to the data sample information, where the data sample information is used for training an AI model, the assistance information corresponding to the data sample information is used to assist in training the AI model, and the data sample information includes at least one of input-related information and label-related information of the model.

In summary, in the embodiment of the present disclosure, the receiving module is configured to receive data sample information and assistance information corresponding to the data sample information, where the data sample information is used for training the AI model, the assistance information corresponding to the data sample information is used to assist in the training of the AI model, and the data sample information includes at least one of input-related information and label-related information of the model. In the embodiment of the present disclosure, a data processing mechanism can be provided to clarify that the server receives data sample information and assistance information corresponding to the data sample information. A collection process for the data sample information and the assistance information corresponding to the data sample information is provided, thereby improving the convenience of data processing. The present disclosure provides a processing method for a "data processing" scenario to clarify that the server receives the data sample information and the assistance information corresponding to the data sample information. A collection process for the data sample information and the assistance information corresponding to the data sample information is provided, thereby reducing the situation where the data collection process cannot be determined, and improving the convenience of data processing.

Optionally, in an embodiment of the present disclosure, the receiving module 4801, when configured to receive the data sample information and the assistance information corresponding to the data sample information, is specifically configured to:
receive the data sample information and the assistance information corresponding to the data sample information sent by a terminal.

Optionally, in an embodiment of the present disclosure, the receiving module 4801 is further configured to:
send first configuration information to the terminal, where the first configuration information is used to configure the terminal to collect the data sample information.

Optionally, in an embodiment of the present disclosure, the receiving module 4801, when configured to receive the data sample information and the assistance information corresponding to the data sample information, is specifically configured to:
receive the data sample information sent by a terminal; and
receive the assistance information corresponding to the data sample information sent by a base station.

Optionally, in an embodiment of the present disclosure, the receiving module 4801, when configured to receive the assistance information corresponding to the data sample information sent by the base station, is specifically configured to:
send a second assistance information collection request to the base station; and
receive the assistance information corresponding to the data sample information sent by the base station in response to the second assistance information collection request.

Optionally, in an embodiment of the present disclosure, the receiving module 4801, when configured to receive the data sample information and the assistance information corresponding to the data sample information, is specifically configured to:
receive the data sample information and the assistance information corresponding to the data sample information sent by a core network device.

Optionally, in an embodiment of the present disclosure, the receiving module 4801, when configured to receive the data sample information and the assistance information corresponding to the data sample information sent by the core network device, is specifically configured to:
send information request to the core network device; and
receive the data sample information and the assistance information corresponding to the data sample information sent by the core network device in response to the information request.

FIG. 49 is a schematic diagram of the structure of a data processing system provided by an embodiment of the present disclosure. As shown in FIG. 49, the system includes:
a terminal, configured to execute the method as shown in any one of FIGS. 1 to 13;
a base station, configured to execute the method as shown in any one of FIGS. 14 to 27;
a core network device, configured to execute the method as shown in any one of FIGS. 28 to 39; and
a server, configured to execute the method as shown in any one of FIGS. 40 to 44.

The present disclosure provides a processing method for a "data processing" scenario, so as to clarify that a terminal collects data sample information, a base station collects assistance information corresponding to the data sample information, and a core network device receives the data sample information and the assistance information corresponding to the data sample information, and then the core network device sends the data sample information and the assistance information corresponding to the data sample information to a server, or the server receives the data sample information and the assistance information corresponding to the data sample information. A collection process for the data sample information and the assistance information corresponding to the data sample information can be provided, thereby reducing the situation where the data collection process cannot be determined and improving the convenience of data processing.

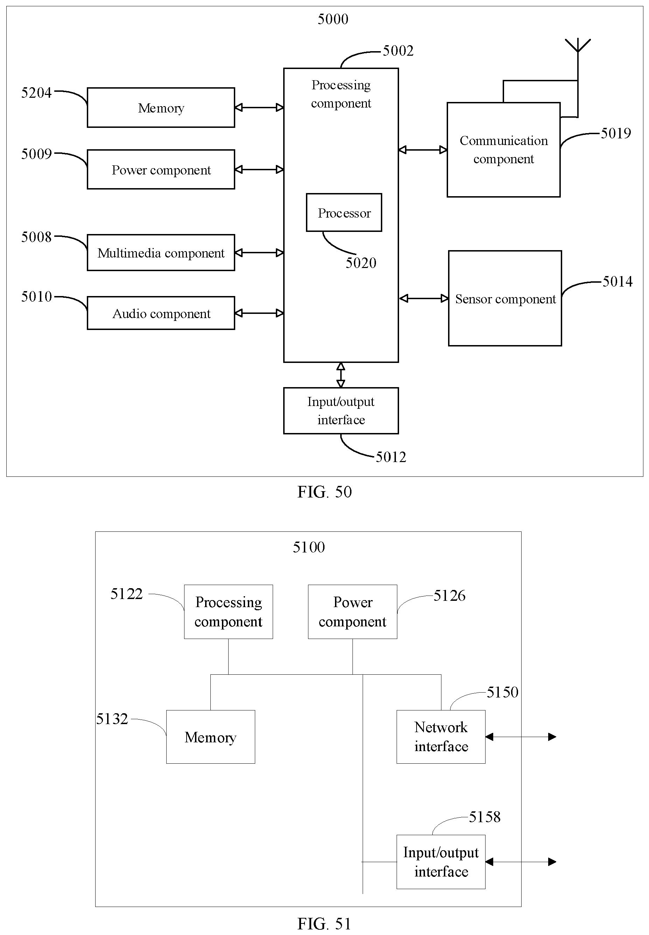

FIG. 50 is a block diagram of a terminal (UE 5000) provided by an embodiment of the present disclosure. For example, UE 5000 may be a mobile phone, a computer, a digital broadcast terminal, a messaging device, a game console, a tablet device, a medical device, a fitness device, a personal digital assistant, etc.

Referring to FIG. 50, UE 5000 may include at least one of the following components: a processing component 5002, a memory 5004, a power component 5006, a multimedia component 5008, an audio component 5010, an input/output (I/O) interface 5012, a sensor component 5014, and a communication component 5016.

The processing component 5002 typically controls overall operations of the UE 5000, such as the operations associated with display, telephone calls, data communications, camera operations, and recording operations. The processing component 5002 may include at least one processor 5019 to execute instructions to perform all or part of the steps in the above-mentioned methods. In addition, the processing component 5002 may include at least one module which facilitate the interaction between the processing component 5002 and other components. For instance, the processing component 5002 may include a multimedia module to facilitate the interaction between the multimedia component 5008 and the processing component 5002.

The memory 5004 is configured to store various types of data to support the operation of the UE 5000. Examples of such data include instructions for any applications or methods operated on the UE 5000, contact data, phonebook data, messages, pictures, video, etc. The memory 5004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 5006 provides power to various components of the UE 5000. The power component 5006 may include a power management system, at least one power supply, and any other components associated with the generation, management, and distribution of power in the UE 5000.

The multimedia component 5008 includes a screen providing an output interface between the UE 5000 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense the wake-up time and a pressure associated with the touch or swipe action. In some embodiments, the multimedia component 5008 includes a front camera and/or a rear camera. The front camera and the rear camera may receive an external multimedia datum while the UE 5000 is in an operation mode, such as a photographing mode or a video mode. Each of the front camera and the rear camera may be a fixed optical lens system or have focus and optical zoom capability.

The audio component 5010 is configured to output and/or input audio signals. For example, the audio component 5010 includes a microphone ("MIC") configured to receive an external audio signal when the UE 5000 is in an operation mode, such as a call mode, a recording mode, and a voice recognition mode. The received audio signal may be further stored in the memory 5004 or transmitted via the communication component 5016. In some embodiments, the audio component 5010 further includes a speaker to output audio signals.

The I/O interface 5012 provides an interface between the processing component 5002 and peripheral interface modules, such as a keyboard, a click wheel, buttons, and the like. The buttons may include, but are not limited to, a home button, a volume button, a starting button, and a locking button.

The sensor component 5014 includes one or more sensors to provide status assessments of various aspects of the UE 5000. For instance, the sensor component 5014 may detect an open/closed status of the device 5000, relative positioning of components, e.g., the display and the keypad, of the UE 5000, a change in position of the UE 5000 or a component of the UE 5000, a presence or absence of user contact with the UE 5000, an orientation or an acceleration/deceleration of the UE 5000, and a change in temperature of the UE 5000. The sensor component 5014 may include a proximity sensor configured to detect the presence of nearby objects without any physical contact. The sensor component 5014 may also include a light sensor, such as a CMOS or CCD image sensor, for use in imaging applications. In some embodiments, the sensor component 5014 may also include an accelerometer sensor, a gyroscope sensor, a magnetic sensor, a pressure sensor, or a temperature sensor.

The communication component 5016 is configured to facilitate communication, wired or wirelessly, between the UE 5000 and other devices. The UE 5000 can access a wireless network based on a communication standard, such as WiFi, 2G, or 3G, or a combination thereof. In one exemplary embodiment, the communication component 5016 receives a broadcast signal or broadcast associated information from an external broadcast management system via a broadcast channel. In one exemplary embodiment, the communication component 5016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the UE 5000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-mentioned methods.

FIG. 51 is a block diagram of a network side device 5100 provided in an embodiment of the present disclosure. For example, the network side device 5100 may be provided as a network side device. Referring to FIG. 51, the network side device 5100 includes a processing component 5122, which further includes at least one processor, and a memory resource represented by a memory 5132 for storing instructions executable by the processing component 5122, such as an application program. The application program stored in the memory 5132 may include one or more modules, each corresponding to one set of instructions. In addition, the processing component 5122 is configured to execute instructions to execute any method of the above-mentioned methods applied to the network side device.

The network side device 5100 may further include a power supply component 5127 configured to perform power management of the network side device 5100, a wired or wireless network interface 5150 configured to connect the network side device 5100 to a network, and an input/output (I/O) interface 5158. The network side device 5100 may operate based on an operating system stored in the memory 5132, such as a Windows Server TM, a Mac OS XTM, a Unix TM, a Linux TM, a Free BSDTM or the like.

In the above embodiments provided by the present disclosure, the methods provided by the embodiments of the present disclosure are introduced from the perspectives of the network side device and the UE, respectively. In order to implement the functions in the methods provided by the above embodiments of the present disclosure, the network side device and the UE may include hardware structures and software modules, and implement the above functions in the form of the hardware structures, software modules, or a combination of the hardware structures and the software modules. One of the above functions may be executed in the form of a hardware structure, a software module, or a combination of the hardware structure and the software module.

In the above embodiments provided by the present disclosure, the methods provided by the embodiments of the present disclosure are introduced from the perspectives of the network side device and the UE, respectively. In order to implement the functions in the methods provided by the above embodiments of the present disclosure, the network side device and the UE may include hardware structures and software modules, and implement the above functions in the form of the hardware structures, software modules, or a combination of the hardware structures and the software modules. One of the above functions may be executed in the form of a hardware structure, a software module, or a combination of the hardware structure and the software module.

The present disclosure provides a communication apparatus. The communication device may include a transceiver module and a processing module. The transceiver module may include a sending module and/or a receiving module, the sending module is used to implement a sending function, the receiving module is used to implement a receiving function, and the transceiver module may implement a sending function and/or a receiving function.

The communication apparatus may be a terminal (such as the terminal in the above-mentioned method embodiments), or an apparatus in the terminal, or an apparatus that can be used in conjunction with the terminal. Alternatively, the communication apparatus may be a network device, or an apparatus in the network device, or an apparatus that can be used in conjunction with the network device.

The present disclosure provides another communication apparatus. The communication apparatus may be a network device, or a terminal (such as the terminal in the above-mentioned method embodiments), or a chip, a chip system, or a processor that supports the network device to implement the above-mentioned methods, or a chip, a chip system, or a processor that supports the terminal to implement the above-mentioned methods. The apparatus may be used to implement the methods described in the above-mentioned method embodiments, and the details may refer to the description in the above-mentioned method embodiments.

The communication apparatus may include one or more processors. The processor may be a general-purpose processor or a dedicated processor, etc. For example, it may be a baseband processor or a central processing unit. The baseband processor may be configured to process the communication protocol as well as communication data, and the central processing unit may be configured to control the communication apparatus (such as a network side device, a baseband chip, a terminal, a terminal chip, a DU or a CU, etc.), execute a computer program, and process the data of the computer program.

Optionally, the communication apparatus may further include one or more memories, on which a computer program may be stored, and the processor executes the computer program so that the communication apparatus performs the methods described in the above method embodiments. Optionally, data may also be stored in the memory. The communication apparatus and the memory may be provided separately or integrated together.

Optionally, the communication apparatus may further include a transceiver and an antenna. The transceiver may be referred to as a transceiver unit, a transceiver, or a transceiver circuit, etc., and is configured to implement the transceiver function. The transceiver may include a receiver and a transmitter, the receiver may be referred to as a receiver or a receiving circuit, etc., and is configured to implement the receiving function; the transmitter may be referred to as a transmitter or a transmitting circuit, etc., and is configured to implement the transmitting function.

Optionally, the communication apparatus may further include one or more interface circuits. The interface circuit is configured to receive code instructions and transmit them to the processor. The processor runs the code instructions to enable the communication apparatus to execute the methods described in the above method embodiments.

The communication apparatus is a terminal (such as the terminal in the above-mentioned method embodiments), then the processor is configured to execute any one of the methods shown in FIGS. 1 to 13.

The communication device is a base station, then the processor is configured to execute any one of the methods shown in FIGS. 14 to 27.

The communication device is a core network device, then the processor is configured to execute any one of the methods shown in FIGS. 28 to 39.

The communication device is a server, then the processor is configured to execute any one of the methods shown in FIGS. 40 to 44.

In one implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In one implementation, the processor may store a computer program, which runs on the processor and enables the communication apparatus to perform the methods described in the above method embodiments. The computer program may be fixed in the processor, in which case the processor may be implemented by hardware.

In one implementation, the communication apparatus may include circuits. The circuits may implement the sending, receiving or communicating function in the preceding method embodiments. The processor and transceiver described in the present disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus described in the above embodiments may be a network device or a terminal (such as the terminal in the above-mentioned method embodiments), but the scope of the communication apparatus described in the present disclosure is not limited thereto, and the structure of the communication apparatus may not be limited. The communication apparatus may be an independent device or may be part of a larger device. For example, the communication apparatus may be:
(1) a stand-alone IC, chip, chip system or subsystem;
(2) a collection of ICs including one or more ICs, optionally, the collection of ICs may also include storage components for storing data and computer programs;
(3) ASIC, such as a modem;
(4) modules that can be embedded in other devices;
(5) receivers, terminals, smart terminals, cellular phones, wireless devices, handheld machines, mobile units, in-vehicle devices, network devices, cloud devices, artificial intelligence devices, and the like; and
(6) others and the like.

For the case that the communication apparatus may be a chip or a chip system, the chip includes a processor and an interface. There may be one or more processors, and there may be a plurality of the interfaces.

Optionally, the chip further includes a memory for storing necessary computer programs and data.

Those skilled in the art may also understand that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the present disclosure.

The present disclosure further provides a readable storage medium having instructions stored thereon. When the instructions are executed by a computer, the functions of any of the method embodiments described above are implemented.

The present disclosure further provides a computer program product. When the computer program product is executed by a computer, the functions of any of the method embodiments described above are implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)), etc.

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Those skilled in the art will readily appreciate other embodiments of the present disclosure after considering the specification and practicing the contents disclosed herein. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the appending claims.

It should be understood that the present disclosure is not limited to the exact construction that has been described above and illustrated in the accompanying drawings, and that various modifications and changes can be made without departing from the scope thereof. The scope of the present disclosure is limited only by the appended claims.

## Claims

1. A data processing method, performed by a terminal, comprising:
collecting data sample information, wherein the data sample information comprises at least one of input-related information and label-related information of an artificial intelligence (AI) model, and the data sample information is used for training the AI model; and
sending the data sample information to a server.

2. The method according to claim 1, further comprising:
acquiring assistance information corresponding to the data sample information, wherein the assistance information corresponding to the data sample information is used to assist in training the AI model.

3. The method according to claim 2, wherein acquiring the assistance information corresponding to the data sample information comprises:
sending a first assistance information collection request to a base station; and
receiving the assistance information corresponding to the data sample information sent by the base station in response to the first assistance information collection request.

4. The method according to claim 2 or 3, further comprising:
sending the data sample information and the assistance information corresponding to the data sample information to the server.

5. The method according to claim 2 or 3, further comprising:
sending the data sample information and the assistance information corresponding to the data sample information to a base station.

6. The method according to claim 1, further comprising:
receiving first configuration information sent by the server; and
collecting the data sample information based on the first configuration information.

7. The method according to claim 1, further comprising:
measuring a reference signal; and
collecting the data sample information based on a measurement result of the reference signal.

8. A data processing method, performed by a base station, comprising:
collecting assistance information corresponding to data sample information, wherein the assistance information corresponding to the data sample information is used to assist in training an AI model; and
performing at least one of following operations:
sending the assistance information corresponding to the data sample information to a server;
sending the assistance information corresponding to the data sample information to a terminal; and
sending the assistance information corresponding to the data sample information to a core network device.

9. The method according to claim 8, further comprising:
receiving a first assistance information collection request sent by the terminal; and
sending, in response to the first assistance information collection request, the assistance information corresponding to the data sample information to the terminal.

10. The method according to claim 8, wherein sending the assistance information corresponding to the data sample information to the server comprises:
receiving a second assistance information collection request sent by the server; and
sending, in response to the second assistance information collection request, the assistance information corresponding to the data sample information is sent to the server.

11. The method according to claim 8, further comprising:
receiving second configuration information sent by the core network device; and
collecting the assistance information corresponding to the data sample information based on the second configuration information.

12. The method according to claim 8, further comprising:
receiving the data sample information sent by the terminal, wherein the data sample information comprises at least one of input-related information and label-related information of the AI model, and the data sample information is used for training the AI model; and
sending the data sample information and the assistance information corresponding to the data sample information to the core network device.

13. The method according to claim 8, further comprising:
sending third configuration information to the terminal, wherein the third configuration information is used to configure the terminal to collect the data sample information.

14. The method according to claim 13, further comprising:
receiving fourth configuration information sent by the core network device; and
determining the third configuration information based on the fourth configuration information.

15. The method according to claim 8, further comprising:
sending a reference signal to the terminal, wherein the reference signal is used to assist in collecting the data sample information.

16. The method according to claim 15, wherein sending the reference signal to the terminal comprises:
receiving fifth configuration information sent by the core network device; and
sending the reference signal to the terminal based on the fifth configuration information.

17. A data processing method, performed by a core network device, comprising:
receiving data sample information and assistance information corresponding to the data sample information, wherein the data sample information is used for training an AI model, the assistance information corresponding to the data sample information is used to assist in training the AI model, and the data sample information comprises at least one of input-related information and label-related information of the model; and
sending the data sample information and the assistance information corresponding to the data sample information to a server.

18. The method according to claim 17, further comprising:
sending third configuration information to a base station, wherein the third configuration information is used to configure a terminal to collect the data sample information.

19. The method according to claim 18, further comprising:
sending fourth configuration information to the base station, wherein the fourth configuration information is used to configure the base station to determine the third configuration information.

20. The method according to claim 17, further comprising:
sending second configuration information to a base station, wherein the second configuration information is used to configure the base station to collect the assistance information corresponding to the data sample information.

21. The method according to claim 17, further comprising:
sending fifth configuration information to a base station, wherein the fifth configuration information is used to configure the base station to send a reference signal to a terminal.

22. The method according to claim 17, wherein receiving the data sample information and the assistance information corresponding to the data sample information comprises:
receiving the data sample information and the assistance information corresponding to the data sample information sent by a terminal.

23. The method according to claim 17, wherein receiving the data sample information and the assistance information corresponding to the data sample information comprises:
receiving the data sample information and the assistance information corresponding to the data sample information sent by a base station.

24. The method according to claim 17, wherein receiving the data sample information and the assistance information corresponding to the data sample information comprises:
receiving the data sample information sent by a base station; and
receiving the assistance information corresponding to the data sample information sent by the base station.

25. The method according to claim 24, further comprising:
performing mapping on the data sample information and the assistance information corresponding to the data sample information to obtain mapped data sample information and assistance information corresponding to the data sample information;
wherein sending the data sample information and the assistance information corresponding to the data sample information to the server comprises:
sending the mapped data sample information and assistance information corresponding to the data sample information to the server.

26. The method according to claim 25, wherein sending the data sample information and the assistance information corresponding to the data sample information to the server comprises:
receiving an information request sent by the server; and
sending, in response to the information request, the data sample information and the assistance information corresponding to the data sample information to the server.

27. A data processing method, performed by a server, comprising:
receiving data sample information and assistance information corresponding to the data sample information, wherein the data sample information is used for training an AI model, the assistance information corresponding to the data sample information is used to assist in training the AI model, and the data sample information comprises at least one of input-related information and label-related information of the model.

28. The method according to claim 27, wherein receiving the data sample information and the assistance information corresponding to the data sample information comprises:
receiving the data sample information and the assistance information corresponding to the data sample information sent by a terminal.

29. The method according to claim 28, further comprising:
sending first configuration information to the terminal, wherein the first configuration information is used to configure the terminal to collect the data sample information.

30. The method according to claim 27, wherein receiving the data sample information and the assistance information corresponding to the data sample information comprises:
receiving the data sample information sent by a terminal; and
receiving the assistance information corresponding to the data sample information sent by a base station.

31. The method according to claim 30, wherein receiving the assistance information corresponding to the data sample information sent by the base station comprises:
sending a second assistance information collection request to the base station; and
receiving the assistance information corresponding to the data sample information sent by the base station in response to the second assistance information collection request.

32. The method according to claim 27, wherein receiving the data sample information and the assistance information corresponding to the data sample information comprises:
receiving the data sample information and the assistance information corresponding to the data sample information sent by a core network device.

33. The method according to claim 32, wherein receiving the data sample information and the assistance information corresponding to the data sample information sent by the core network device comprises:
sending an information request to the core network device; and
receiving the data sample information and the assistance information corresponding to the data sample information sent by the core network device in response to the information request.

34. A data processing apparatus, provided on a terminal side, comprising:
a collecting module, configured to collect data sample information, wherein the data sample information comprises at least one of input-related information and label-related information of an AI model, and the data sample information is used for training the AI model; and
a sending module, configured to send the data sample information to a server.

35. A data processing apparatus, provided on a base station side, comprising:
a collecting module, configured to collect assistance information corresponding to data sample information, wherein the assistance information corresponding to the data sample information is used to assist in training the AI model; and
a sending module, configured to perform at least one of following operations:
sending the assistance information corresponding to the data sample information to a server;
sending the assistance information corresponding to the data sample information to a terminal; and
sending the assistance information corresponding to the data sample information to a core network device.

36. A data processing apparatus, provided on a core network device side, comprising:
a receiving module, configured to receive data sample information and assistance information corresponding to the data sample information, wherein the data sample information is used for training an AI model, the assistance information corresponding to the data sample information is used to assist in training the AI model, and the data sample information comprises at least one of input-related information and label-related information of the model; and
a sending module, configured to send the data sample information and the assistance information corresponding to the data sample information to a server.

37. A data processing apparatus, provided on a server side, comprising:
a receiving module, configured to receive data sample information and assistance information corresponding to the data sample information, wherein the data sample information is used for training an AI model, the assistance information corresponding to the data sample information is used to assist in training the AI model, and the data sample information comprises at least one of input-related information and label-related information of the model.

38. A terminal, comprising a processor and a memory, wherein a computer program is stored in the memory, and the processor executes the computer program stored in the memory to cause the apparatus to perform the method according to any one of claims 1 to 7.

39. A base station, comprising a processor and a memory, wherein a computer program is stored in the memory, and the processor executes the computer program stored in the memory to cause the apparatus to perform the method according to any one of claims 8 to 16.

40. A core network device, comprising a processor and a memory, wherein a computer program is stored in the memory, and the processor executes the computer program stored in the memory to cause the apparatus to perform the method according to any one of claims 17 to 26.

41. A server, comprising a processor and a memory, wherein a computer program is stored in the memory, and the processor executes the computer program stored in the memory to cause the apparatus to perform the method according to any one of claims 27 to 33.

42. A communication apparatus, comprising: a processor and an interface circuit,
wherein the interface circuit is configured to receive code instructions and transmit the code instructions to the processor; and
the processor is configured to execute the code instructions to perform the method according to any one of claims 1 to 7, 8 to 16, 17 to 26, or 27 to 33.

43. A computer-readable storage medium, configured to store instructions, and when the instructions are executed, cause the method according to any one of claims 1 to 7, 8 to 16, 17 to 26, or 27 to 33 to be implemented.

44. A data processing system, comprising:
a terminal, configured to execute the method according to any one of claims 1 to 7;
a base station, configured to execute the method according to any one of claims 8 to 16;
a core network device, configured to execute the method according to any one of claims 17 to 26; and
a server, configured to execute the method according to any one of claims 27 to 33.
